# EUROPÄISCHE PATENTANMELDUNG

(11) **EP 1 107 092 A1**
(43) Veröffentlichungstag der Anmeldung: **13.06.2001**
(21) Anmeldenummer: 00126278.1
(22) Anmeldetag: 01.12.2000
(51) Int. Cl.: G06F 1/18

(54) **Befestigungsvorrichtung für Computerfunktionseinheiten**

(30) Priorität: 01.12.1999 DE 29920870 U
(71) Anmelder: Hagedorn, Markus, 41468 Neuss (DE)
(72) Erfinder: Hagedorn, Markus, 41468 Neuss (DE)
(74) Vertreter: Ackmann, Günther, Dr.-Ing.

(57) **Zusammenfassung**

Die Erfindung betrifft ein Computergehäuse, bestehend aus Gehäusebauteilen, wie Gehäuserahmenteilen, Gehäusewandteile und Trägereinheiten für Computerfunktionseinheiten 14. Zur Senkung der Herstellungskosten und zum erleichterten Austausch von Computerfunktionseinheiten 14 wird erfindungsgemäß vorgeschlagen, dass zumindestens eine, vorzugsweise mehrere Computerfunktionseinheiten 14 durch stiftähnliche Befestigungsvorrichtungen 86 in dem Computergehäuse gehalten sind. Die stiftähnliche Befestigungsvorrichtungen korrespondieren hierbei mit normierten Gewindebohrungen 16 der Computerfunktionseinheiten 14 und ermöglichen somit ein einfaches und rationelles Aufstecken der jeweilige Computerfunktionseinheiten 14 zur Montage im Computergehäuse.

## Beschreibung

Die Erfindung betrifft ein Computergehäuse bestehend aus Gehäusebauteilen, wie Gehäuserahmenteile, Gehäusewandteile und Trägereinheiten für Computerfunktionseinheiten, beispielsweise Platinen, Stromversorgungseinheiten, Erweiterungskarten und/oder Laufwerke.

Gattungsgemäße Computergehäuse sind in großer Zahl im täglichen Einsatz. Bei einem Computergehäuse definiert ein ein- oder mehrteiliger Gehäuserahmen ein im wesentlichen quaderförmiges Volumen, welches die dreidimensionalen Abmessungen des Computers bestimmt. Dabei wird unter Berücksichtigung der Anforderungen an ein geringes Gewicht eine Rahmenkonstruktion bevorzugt, die mit Gehäusewandteilen verkleidet werden kann. Es ist durchaus üblich und bekannt, einzelne Seiten des Gehäuserahmens vollflächig auszugestalten, sodass hier eine spätere Gehäuseaußenseite gebildet wird. Die einzelnen Seiten werden durch Gehäusewandteile verkleidet, wobei die Gehäusewandteile einzelne Flächen oder auch Gehäuseschalen sein können. Üblicherweise ist eine Seite des Gehäuserahmens als Frontseite ausgebildet und entweder mit einem Frontwandteil verkleidet, oder direkt als solches ausgebildet. Ferner ist es bekannt, das Frontwandteile mit einer Abdeckung verkleidet werden können. So ist auch bei der Rückseite eines Computergehäuses meist der Gehäuserahmen direkt als Rückwandteil ausgebildet. In dem Inneren des Gehäuserahmens verbleibt ein mit den eigentlichen Computerfunktionseinheiten bestückbarer Raum. Zu diesem Zweck wird der Rahmen mit Träger- oder Befestigungseinheiten ausgefacht. Die Trägereinheiten können hierbei gleichzeitig einen Teil des Gehäuserahmens bilden. Sie sind weitgehend hinsichtlich der Befestigungsmöglichkeiten für Computerfunktionseinheiten normiert und dienen der Anordnung herkömmlicher und in großen Stückzahlen produzierter Computerfunktionseinheiten, wie Platinen, Erweiterungskarten, Laufwerken, Netzteilen und dergleichen, im Gehäuse. Vorgenannte Computerfunktionseinheiten werden durch Schrauben in dem Computergehäuse befestigt. An normierten Positionen an den Seiten oder im Boden der Computerfunktionseinheiten sind Gewindebohrungen mit einem Innengewinde vorhanden, welche zur Befestigung vorgesehen sind. Meist handelt es sich hierbei um zwei oder vier Innengewinde in zwei sich gegenüberliegenden Seiten der Computerfunktionseinheiten. Diese Innengewinde korrespondieren mit Öffnungen in Trägereinheiten für Computerfunktionseinheiten in einem Computergehäuse, in das sie montiert werden können. Die Trägereinheiten für Computerfunktionseinheiten sind feste Bestandteile eines Computergehäuses (z. B. Rahmenteil) oder entfernbare, einzelne Trägereinheiten. Die Trägereinheiten liegen an den Seiten der Computerfunktionseinheiten mit den Innengewinden an. Zur Befestigung werden Schrauben durch den Teil einer Trägereinheit für Computerfunktionseinheiten, der an der Computerfunktionseinheit anliegt, geführt und mit dem Innengewinde in der Computerfunktionseinheit verschraubt. Die Trägereinheit berührt mindestens zwei Seiten der Computerfunktionseinheit, hierdurch ist eine ausreichend stabile Befestigung der Computerfunktionseinheit in einem Computergehäuse gewährleistet. Ferner ist es bekannt, dass Computerfunktionseinheiten mit Schrauben an Schienen oder Trägereinheiten befestigt werden, die das Einschieben bzw. Einschwenken der Computerfunktionseinheiten in ein Computergehäuse ermöglichen. Weiterhin ist es bekannt, die Trägereinheiten als zwei Halbschalen auszubilden, welche die Computerfunktionseinheit einschließen. Bei diesem Herstellungsverfahren liegt die Computerfunktionseinheit in einer an ihre Maße angepassten Halbschale und wird mit einer zweiten an ihre Maße angepassten Halbschale in ihrer Position fixiert. Beide Halbschalen werden dann miteinander verbunden. Für Laufwerke und ähnliche Computerfunktionseinheiten wird an vorgegebenen Stellen des Gehäuserahmens eines Computergehäuses üblicherweise eine ein-oder mehrstöckige Einbauschachteinheit als Trägereinheit angeordnet, die eine bestimmte Anzahl von Einbauschächten für Computerfunktionseinheiten, wie z. B. Festplatten, Streamer oder Floppy-Laufwerke in normierten Größen, meist in 5,25 Zoll und 3,5 Zoll, aufweist. Es ist ebenfalls bekannt, in die Trägereinheit mit 5,25-Zoll-Einbauschächten Trägereinheiten für kleinere Funktionseinheiten, wie z. B. 3,5-Zoll-Computerfunktionseinheiten, zu montieren. Für fast jede Computerfunktionseinheit existiert eine Ausführung in der Bauform einer 5,25-Zoll-Computerfunktionseinheit. Zur Einsparung von Herstellungskosten wird meist eine einzelne große Trägereinheit mit mehreren aneinander liegenden und nicht von einander getrennten 5,25-Zoll-Einbauschächten benutzt. Ferner ist es bekannt, dass die Trägereinheit für 3,5-Zoll-Computerfunktionseinheiten fast die gesamt Fläche des Frontwandteils eines Computergehäuses einnehmen können. Zusätzlich kann ggf. die gesamte Fläche des Rückwandteils für Computerfunktionseinheiten im 5,25-Zoll-Format ausgelegt sein und eine Trägereinheit für 5,25-Zoll-Computerfunktionseinheiten gleichzeitig den tragenden Rahmen für ein Computergehäuse bilden. Darüber hinaus ist es bekannt, schwingungsdämmende Elemente zwischen Computerfunktionseinheiten und deren Trägereinheiten anzubringen, damit die Geräuschentwicklung gedämpft wird und eine gewisse Stoßfestigkeit erzielt wird.

Es ist auch bekannt, Trägereinheiten für Computerfunktionseinheiten zu fertigen, die einhängbar, einschiebbar oder einschwenkbar und entnehmbar ausgebildet sind, wobei ein Computergehäuse mehrere Träger für Steckkarten oder Platinen aufweisen kann. Diese Trägereinheiten sind neben- oder übereinander an einem Gehäusewandteil angeordnet. Die Trägereinheiten für Steckkarten können ein- oder mehrere Seitenteile eines Computergehäuses bilden. Meist ist das Frontwandteil als Trägereinheit ausgebildet, wobei in dem Frontwandteil eine große Öffnung ausgebildet ist, in welche von außen Steckkarten, wie z. B. Compact-PCI-Karten eingeschoben werden. An der Öffnung sind Befestigungsmöglichkeiten für eingeschobene Steckkarten und Führungsschienen angebracht. Die Führungsschienen sind im Inneren des Computergehäuses an einem Träger für die Verbindungsplatinen, auf welche die Steckkarten gesteckt werden, befestigt. Die größte Öffnung ist von den einzusetzenden Steckkarten und ihrem Standard abhängig. Die Steckkarten sind nach verschiedenen Standards genormt. So gibt es z. B. VME-Steckkarten und Compact-PCI-Steckkarten. Im Weiteren können mehrere Trägereinheiten zur Aufnahme von Platinen vorgesehen sein, wobei auf die Platinen Erweiterungskarten aufgesteckt werden können.

Spezielle Trägereinheiten können zur Aufnahme von Platinen eines Computers oder weiterer erforderlicher Technik vorgesehen sein. Beispielsweise sind Erweiterungskarten bekannt, die nur die Bildverarbeitung eines Computers übernehmen oder auch Erweiterungskarten, die eigenständige Computer darstellen. Ferner ist es bekannt, Erweiterungskarten in einem eigenen Gehäuse auf die Platinen zu stecken. Die Trägereinheit für Erweiterungskarten ist üblicherweise ein Befestigungsgitter, welches im rechten Winkel zur Trägerplatte der Platine steht und an dem Rückwandteil des Gehäuses befestigt ist. Hierbei ist es bekannt, das Befestigungsgitter für Erweiterungskarten mit Trägerplatten für Platinen zu einer Trägereinheit zusammenzufügen.

Alle Gehäuse von Stromversorgungseinheiten für Computer gemäß dem Stand der Technik benötigen einen vom Computergehäuse vorbestimmten Raum innerhalb eines Computergehäuses. Die Bauformen der Gehäuse für Stromversorgungseinheiten von Computern richten sich entweder nach allgemeinen Standards, wie z. B. PS2 oder ATX oder nach den Anforderungen, die an die Ausstattung und Qualität der Stromversorgungseinheit gestellt werden. Ein Beispiel für an die Anforderungen angepasste Bauformen sind z. B. große Stromversorgungseinheiten für Computer, in denen zwei oder mehrere kleinere Stromversorgungseinheiten für Computer zusammengefasst sind. Bei diesen großen Stromversorgungseinheiten für Computer sind die einzelnen kleineren Stromversorgungseinheiten für Computer während des Betriebes auswechselbar. Dies wird dadurch erreicht, dass die kleineren Stromversorgungseinheiten in das Gehäuse der größeren Stromversorgungseinheit für Computer einsetzbar und herausziehbar ausgeführt werden und die Lastverteilung auf die einzelnen kleineren Stromversorgungseinheiten von einer Steuerungselektronik verteilt wird, die bei Ausfall einer kleineren Stromversorgungseinheit die Stromversorgungslast auf verbliebene kleinere Stromversorgungseinheiten verteilt. Meist ist das Gehäuse einer großen Stromversorgungseinheit als ein Rahmen ausgebildet. An dem Rahmen oder Gehäuse der großen Stromversorgungseinheit für Computer sind meist auch die Steuerungselektronik, der Anschluss für Wechselstrom und die Gleichstromanschlüsse für Computerfunktionseinheiten oder nur eine der aufgezählten Komponenten befestigt. Ferner ist bekannt, die einzelnen, kleineren Stromversorgungseinheiten für Computer, die in den großen Stromversorgungseinheiten für Computer zusammengefasst werden, in der Baugröße einer 5,25-Zoll-Computerfunktionseinheit halber Bauhöhe auszubilden. Auch bei diesen 5,25-Zoll-Gehäusen für Stromversorgungseinheiten von Computern benötigt das Gehäuse der größeren Stromversorgungseinheit für Computer eine angepasste Öffnung in einem Gehäusewandteil des Computergehäuses, in welches es eingebaut werden kann. Alle bekannten Stromversorgungseinheiten werden an einer bestimmten Stelle in das Computergehäuse eingebaut. Diese Position ist meist hinter einer der Stromversorgungseinheit angepassten Öffnung in einem Gehäusewandteil des Computergehäuses, welches mit besonderen, von der Stromversorgungseinheit benötigten, Befestigungsvorrichtungen ausgestattet ist.

Wenn ein Computergehäuse Stromversorgungseinheiten in unterschiedlichen Bauformen aufnehmen können soll, wird dies dadurch gewährleistet, dass eine an die größte einzusetzende Stromversorgungseinheit angepasste Öffnung in einem Gehäusewandteil mit verschiedenen Blenden vorhanden ist. Diese Blenden weisen wieder an andere, kleinere Stromversorgungseinheiten angepasste Öffnungen und Befestigungsvorrichtungen auf. Bei Gehäusen für Stromversorgungseinheiten, die dem Stand der Technik entsprechen, ist immer ein an das Gehäuse der Stromversorgungseinheit angepasstes Computergehäusewandteil erforderlich.

Bei gattungsgemäßen Befestigungsvorrichtungen für Computerfunktionseinheiten gemäß dem Stand der Technik ergeben sich somit verschiedene Probleme bei der Bestückung des Computergehäuses mit diesen Computerfunktionseinheiten, also der Herstellung eines Computers. Da Computerfunktionseinheiten entweder an einer Trägereinheit oder an einer Befestigungsvorrichtung für die Computerfunktionseinheiten angeschraubt werden müssen, sind eine Vielzahl von Schrauben zur Montage der Computerfunktionseinheiten notwendig. Ferner wird für die Montage ein erheblicher Zeitaufwand benötigt, wodurch die Herstellungskosten verteuert werden.

Unter Zugrundelegung des Stand der Technik liegt der vorliegenden Erfindung daher die Aufgabe zugrunde, Computergehäuse der gattungsgemäßen Art weiter zu bilden und die beschriebenen Nachteile und Probleme zu beseitigen, um die Herstellungskosten zu senken.

Erfindungsgemäß ist zur Lösung der Aufgabe vorgesehen, dass zumindest eine Computerfunktionseinheit durch stiftähnliche Befestigungsvorrichtungen in dem Computergehäuse gehalten ist, welche mit den Gewindebohrungen der Computerfunktionseinheiten korrespondieren und in diese eingreifen. Die Verwendung von einheitlichen Befestigungsvorrichtungen führt zu einer erheblichen Reduzierung der unterschiedlichen Schrauben, wodurch im Weiteren die Herstellungskosten und auch die Montagezeit verringert werden kann. Der Teil des Computergehäuses, der zur Befestigung der Computerfunktionseinheiten dient, ist die Trägereinheit für Computerfunktionseinheiten. Die stiftähnlichen Befestigungsvorrichtungen befinden sich an Positionen der Trägereinheit, die mit dem Innengewinde an normierten Positionen in den Seiten oder im Boden der Computerfunktionseinheiten korrespondieren. Die stiftähnlichen Befestigungsvorrichtungen werden in vorteilhafter Weise bei der Montage in die Innengewinde der Computerfunktionseinheiten eingeführt. Der besondere Vorteil der Erfindung liegt darin, dass die einzubauenden Computerfunktionseinheiten auf die stiftähnlichen Befestigungsvorrichtungen lediglich aufgesteckt zu werden brauchen und somit umfangreiche Schraubarbeiten, welche darüber hinaus sehr viel Zeit benötigen, entfallen.

Durch die erfindungsgemäße Ausführung der Befestigungsvorrichtungen besteht sowohl bei der Herstellung der Computergehäuse als auch bei einem späteren Umbau eine schnelle Montagemöglichkeit, wobei die Anzahl der unterschiedlichen Schrauben erheblich reduziert ist, sodass einerseits die Montagezeit verringert wird und andererseits die Herstellungskosten gesenkt werden können, wobei gleichzeitig die Befestigungsvielfalt erhalten bleibt und für eine ausreichende Befestigung der Computerfunktionseinheiten und ggf. kleineren Baugruppen in Form von Trägereinheiten gesorgt ist.

In weiterer Ausgestaltung der Erfindung wird in vorteilhafter Weise vorgeschlagen, dass mindestens eine Trägereinheit selbst durch stiftähnliche Befestigungsvorrichtungen in dem Computergehäuse aufgenommen und gehalten ist. Durch diese vorgeschlagene Maßnahme ist ein individueller Austausch der verwendeten Trägereinheiten innerhalb des Computergehäuses möglich und eröffnet dem Benutzer ein Größtmass an Variabilität bei der Bestückung des Computergehäuse. Ferner wird durch die stiftähnlichen Befestigungsvorrichtungen eine ausreichende und hohe Stabilität erreicht, sodass die genannten Vorteile sowohl bei der Herstellung als auch bei einem späteren Umbau zur Geltung kommen.

In weiterer Ausgestaltung der Erfindung ist vorgesehen, dass die stiftähnlichen Befestigungsvorrichtungen ein Bestandteil der Trägereinheit und/oder des Computergehäuses sind und/oder an diesen befestigt sind, wobei die mindestens eine Trägereinheit ein fester Bestandteil des Computergehäuses oder aus dem Computergehäuse entfernbar ist. Hierdurch ist ein rationelle und preiswerte Herstellung eines Computergehäuses möglich.

In weiterer vorteilhafter Ausgestaltung der Erfindung ist vorgesehen, dass die Trägereinheit ein oder mehrteilig ausgebildet ist und mit ihren Befestigungsvorrichtungen eine oder mehrere Computerfunktionseinheiten halten, wobei die Computerfunktionseinheiten zumindest einseitig, vorzugsweise zweiseitig, durch die stiftähnlichen Befestigungsvorrichtungen gehalten sind. Für den Fall, dass die Trägereinheit mehrteilig ausgebildet sein sollten, können diese bereits mit entsprechend normierten Befestigungsvorrichtungen ausgestattet sein und ermöglichen den Einbau der Computerfunktionseinheiten in mehreren Schritten, wobei zunächst diese in einer Grundeinheit aufgenommen und durch entsprechende weitere Teile der Trägereinheit endgültig fixierbar sind.

In weiterer vorteilhafter Ausgestaltung der Erfindung ist vorgesehen, dass die stiftähnlichen Befestigungsvorrichtungen des Computergehäuses oder der Trägereinheiten aus Wandteilen dieser, vorzugsweise durch Ausstanzen und Umbiegen herausgearbeitet sind und/oder dass die stiftähnlichen Befestigungsvorrichtungen angeschweißt sind und/oder dass die stiftähnlichen Befestigungsvorrichtungen aus in Gewindebohrungen einschraubbaren Stiftschrauben mit Gewindeteil und einem glatten Stiftteil bestehen, wobei das Gewindeteil vorzugsweise einen größeren Durchmesser als das Stiftteil aufweist. Sämtliche vorgenannten Ausführungen der Befestigungsvorrichtungen gewährleisten eine ausreichende Stabilität zur Aufnahme der Computerfunktionseinheiten und stellen darüber hinaus einfache und preiswerte Lösungen dar, welche zu einer erheblichen Kostenreduzierung der Computergehäuse führen. Bereits bei der Fertigung der Computerrahmenteile oder Trägereinheiten können durch entsprechende Ausstanzungen und Umbiegungen die Befestigungsvorrichtungen zum Teil hergestellt werden, sodass sehr viele der notwendigen Befestigungsvorrichtungen für die Computerfunktionseinheiten an normierten Position der Innengewinde existieren und eine Vielzahl von Schrauben entfallen kann, weil die betreffenden Computerfunktionseinheiten bzw. Trägereinheiten unmittelbar auf die Befestigungsvorrichtungen aufgesteckt werden können.

Als besonders vorteilhaft eignen sich einschraubbare Stiftschrauben als Befestigungsvorrichtungen, welche ein Gewindeteil und einen glatten Stiftteil aufweisen. Der Gewindeteil kann hierbei beispielsweise in die Computerfunktionseinheiten, Trägereinheiten oder Teile des Computergehäuses eingeschraubt werden und ragt mit seinem glatten Stiftteil aus dem aufnehmenden Bauteil heraus, sodass auf die herausragenden glatten Stiftteile einzelne Computerfunktionseinheiten, aber auch Trägereinheiten einfach aufgesteckt werden können. Hierbei besteht im Weiteren in vorteilhafter Weise die Möglichkeit, eine Computerfunktionseinheit in einer Trägereinheit durch Einschrauben der Gewindestifte von außen zu fixieren. Hierdurch ist eine sehr günstige Montage und Herstellung der Computergehäuse gewährleistet. Mit dem Gewinde kann die stiftähnliche Befestigungsvorrichtung an der Trägereinheit befestigt werden und der Schraubenteil ohne Gewinde wird in die Innengewinde in normierten Position der Computerfunktionseinheiten eingesteckt. Hierdurch ergibt sich der wesentliche besondere Vorteil, dass die Gewindestifte oder Stiftschrauben wieder heraus drehbar und damit entfernbar sind. Der Durchmesser des Gewindes ist in vorteilhafter Weise an die Gewindeabmessungen einer Schraube zur Befestigung einer Computerfunktionseinheit angepasst. Hierdurch kann die stiftähnlichen Befestigungsvorrichtung ggf. einzeln eingesetzt und entfernt werden oder es können handelsübliche Schrauben zur Befestigung der Computerfunktionseinheiten an derselben Stelle verwendet werden.

In weiterer besonderer Ausgestaltung der Erfindung ist vorgesehen, dass die stiftähnlichen Befestigungsvorrichtungen vorzugsweise aus dem Metall des Computergehäuses oder der Trägereinheit bestehen und/oder dass die stiftähnlichen Befestigungsvorrichtungen aus einem natürlichen oder künstlichen Material oder einer Kombination von verschiedenen Materialien bestehen und/oder dass die stiftähnlichen Befestigungsvorrichtungen aus einem Metallkern mit einer zumindest teilweise elastischen Ummantelung bestehen oder mit einem Ring aus elastischem Material ausgestattet sind. Sofern die stiftähnlichen Befestigungsvorrichtungen aus Metall ausgebildet sind wird hierdurch eine bessere elektrische Leitfähigkeit erzielt. Es kann aber auch von Vorteil sein, wenn andere Materialien, z. B. Kunststoffe oder natürliche Materialien, wie z. B. Kautschuk, verwendet werden. Die Aufzählung der möglichen Materialien für die stiftähnlichen Befestigungsvorrichtungen ist nicht abschließend, nur exemplarisch zu verstehen, da eine Vielzahl von Materialien berücksichtigt werden kann. Als besonders vorteilhaft sind Befestigungsvorrichtungen mit einem Metallkern und zumindest einer teilweisen elastischen Ummantelung anzusehen, wenn einerseits eine stabile befestigende Computerfunktionseinheiten gewünscht wird und andererseits eine Schwingungsentkopplung vorgenommen werden sollte. Hierdurch können ggf. Geräuschbelästigungen durch eingebaute Laufwerke vermieden werden oder aber die Laufwerke können vor harten Stößen, die unmittelbar auf das Computergehäuse einwirken, geschützt werden. Auch bei der Verwendung eines elastischen Ringes besteht die Möglichkeit einer vorteilhaften Schwingungsentkopplung.

In weiterer Ausgestaltung der Erfindung ist vorgesehen, dass die Enden der stiftähnlichen Befestigungsvorrichtungen zumindest teilweise einen runden, dreieckigen, viereckigen oder vieleckigen Querschnitt aufweisen. Sämtliche der vorgenannten Ausführungen der Befestigungsvorrichtungen sind geeignet, in die vorhandenen Gewindebohrungen der Computerfunktionseinheiten aufgenommen zu werden und für einen sicheren und ausreichenden Halt zu sorgen. Die Form der Querschnitte der stiftähnlichen Befestigungsvorrichtungen ist ebenfalls nur exemplarisch zu verstehen und durch andere denkbare kombinierte Formen ersetzbar.

In weiterer besonderer Ausgestaltung der Erfindung ist vorgesehen, dass ein oder mehrere Computerfunktionseinheiten teilweise durch eine Trägereinheit und teilweise durch einen Teil des Computergehäuses, beispielsweise des Gehäuserahmens, gehalten sind und/oder dass einzelne Trägereinheiten oder Trägereinheitenteile Bestandteil des Computergehäuses, insbesondere der äußeren Gehäuseteile, sind, oder dass mehrere gleichgroße und/oder unterschiedlich große Computerfunktionseinheiten in einer Trägereinheit zusammengefasst und ein- oder beidseitig durch Befestigungsvorrichtungen fixiert sind, wobei im Fall einer einseitigen Anordnung durch Flächenpressung der gegenüberliegenden Seite eine Fixierung erfolgt und/oder dass mehrere unterschiedliche Trägereinheiten kombiniert oder ineinander verschachtelt in dem Computergehäuse angeordnet sind.

Die erfindungsgemäßen stiftähnlichen Befestigungsvorrichtungen ermöglichen eine Vielzahl von Montagemöglichkeiten, beispielsweise können die Computerfunktionseinheiten in einfacher oder mehrfacher Anordnung in einer Trägereinheit aufgenommen sein und diese wiederum in dem Gehäuserahmen des Computergehäuses befestigt werden. Es besteht aber darüber hinaus die Möglichkeit das einzelne Computerfunktionseinheiten sowohl einseitig in einer Trägereinheit als auch in einem Teil des Computergehäuses durch die stiftähnlichen Befestigungsvorrichtungen gehalten sind. In besonderer vorteilhafter Ausgestaltung können hierbei einzelne Trägereinheiten oder Teile von Trägereinheiten bereits Bestandteil des Computergehäuses, insbesondere der äußeren Gehäuseteile, sein, wodurch die Anzahl der Bauelemente für ein Computergehäuse erheblich reduziert werden kann. Verständlicher Weise können hierdurch die Produktionskosten ebenfalls reduziert werden. In weiterer Ausgestaltung können einzelne Trägereinheiten zur Aufnahme von Computerfunktionseinheiten einer Baugröße verwendet werden und mehrere unterschiedlich große Trägereinheiten können dann innerhalb des Computergehäuses entsprechend vertikal oder horizontal angeordnet werden, sodass dem Benutzer des Computergehäuses die Möglichkeit gegeben ist, das gesamte Volumen eines Computergehäuses in vorteilhafter Weise auszunutzen. Hierbei ist auch die Möglichkeit gegeben, dass die Trägereinheit aus mehr als zwei Teilen besteht, um die individuelle Zugänglichkeit zu den einzelnen Einbauplätzen zu erhöhen. Es besteht beispielsweise die Möglichkeit, dass die Computerfunktionseinheit auf einen ersten Teil der Trägereinheit mit stiftähnlichen Befestigungsvorrichtungen gelegt oder aufgesteckt wird, sodass die an dem ersten Teil der Trägereinheit vorhandenen stiftähnlichen Befestigungsvorrichtungen in die Innengewinde in normierten Positionen der ersten Seite der Computerfunktionseinheit eingreifen. Der zweite Teil der Trägereinheit mit nahezu identischen stiftähnlichen Befestigungsvorrichtungen kann dann in vorteilhafter Weise auf die eingesetzten Computerfunktionseinheiten aufgesetzt und entsprechend fixiert werden. Hierbei greifen die an dem zweiten Trägerteil angebrachten stiftähnlichen Befestigungsvorrichtungen ebenfalls in die Innengewinde in normierten Position der zweiten Seite der Computerfunktionseinheit ein. Hierdurch wird eine oder ggf. mehrere Computerfunktionseinheit in der Trägereinheit aufgenommen und kann auch jederzeit in einfachster Weise wieder demontiert werden. Nach der Montage kann das Computergehäuse stehend oder liegend verwendet werden, nach dem die Trägereinheit ebenfalls eingesetzt und befestigt ist. Die lösbare Fixierung der beiden Teile der Trägereinheit kann durch Schraubverbindungen, Steckverbindungen, Haken oder Verschluss-Schienen oder einer Kombination dieser Verbindungen erfolgen. Die Aufzählung der Fixierungsmöglichkeiten ist ebenfalls nur exemplarisch anzusehen und nicht als abschließend anzusehen. Der besondere Vorteil dieser Montagemöglichkeit besteht darin, dass einzelne Trägereinheiten mit Computerfunktionseinheiten außerhalb des Gehäuses vormontiert werden können, wodurch eine rationelle und preisgünstige Herstellung der Computergehäuse möglich ist.

In weiterer vorteilhafter Ausgestaltung der Erfindung ist vorgesehen, dass eine Trägereinheit zur Aufnahme von Platinen, Erweiterungs-, Steckkarten oder Stromversorgungseinheiten vorgesehen ist, welche in ihrer Bauform der vollen oder halben Bauhöhe von einem und/oder mehreren 5,25-Zoll-Computerfunktionseinheiten entspricht und mit den einzusetzenden Computerfunktionseinheiten korrespondierende Befestigungsvorrichtungen und/oder stiftähnliche Befestigungsvorrichtungen und die gleichen Befestigungsbohrungen, wie handelsübliche 5,25-Zoll-Computerfunktionseinheiten, aufweisen. Durch diese Ausbildung der Trägereinheiten mit halber oder voller Bauhöhe von 5,25-Zoll-Computerfunktonseinheiten ist ein Höchstmaß an Variabilität gegeben, sodass die Anordnung der Platinen, Erweiterungs- oder Steckkarten oder ggf. Stromversorgungseinheiten dem Benutzer letztendlich überlassen werden kann. Hierzu werden eine oder mehrere Trägereinheiten in einer Trägereinheit für 5,25-Zoll-Einbauschächte des Computergehäuses einschiebbar und montierbar ausgestaltet, wobei ggf. ein oder mehrere Trägereinheiten an einer Öffnung in einem Gehäusewandteil für 5,25 Zoll-Computerfunktionseinheiten befestigt werden können und wobei das Computergehäuse vorzugsweise aus wenigen identischen Teilen mit großen Öffnungen zur Aufnahme der entsprechend ausgebildeten Trägereinheiten oder Computerfunktionseinheiten ausgebildet ist. Zur elektrischen Kontaktierung der einzelnen Trägereinheiten ist in weiterer vorteilhafter Ausgestaltung der Erfindung vorgesehen, dass die Trägereinheit für Platinen oder Steckkarten ggf. mit einer Trägereinheit für Verbindungsplatinen der Steckkarten zu einer Einheit elektrisch verbunden sind. Über die Trägereinheit mit entsprechenden Verbindungsplatinen besteht somit die Möglichkeit die einzelnen Computerfunktionseinheiten miteinander elektrisch zu verbinden. Selbstverständlich besteht die Möglichkeit einzelne Trägereinheiten sowohl vertikal als auch horizontal in dem Computergehäuse anzuordnen, sodass entsprechend dem gewählten Gehäusetyp eine liegende oder stehende Nutzung ermöglicht wird.

In weiterer vorteilhafter Ausgestaltung der Erfindung ist vorgesehen, dass durch mindestens eine Trägereinheit für Platinen mittels stiftähnlichen Befestigungsvorrichtungen der Raum, der von einem Computergehäuse für eine Trägereinheit für Platinen zur Verfügung gestellt wird, für 5,25-Zoll-Computerfunktionseinheiten ganz oder teilweise nutzbar ist und dass eine oder mehrere Trägereinheiten für Platinen oder Erweiterungskarten in die Trägereinheit mit 5,25-Zoll-Einbauschächten mit stiftähnlichen Befestigungsvorrichtungen lösbar, beispielsweise durch Führungsschienen, eingesetzt ist.

Um ein Höchstmaß an Variabilität beizubehalten ist in weiterer vorteilhafter Ausgestaltung der Erfindung vorgesehen, dass das Gehäuse für Stromversorgungseinheiten von Computern durch eine Montagevorrichtung von außen entfernbar in einem Standardeinbauplatz einer 5,25-Zoll-Computerfunktionseinheit halber oder voller Bauhöhe durch stiftähnliche Befestigungsvorrichtungen montiert ist und/oder dass das Gehäuse für Stromversorgungseinheiten von Computern in einem Standardeinbauplatz einer 5,25-Zoll-Computerfunktionsseinheit halber oder voller Bauhöhe durch stiftähnliche Befestigungsvorrichtungen montiert ist.

Damit eine ausreichende Kühlung der Computerfunktionseinheiten in den vorgesehenen Trägereinheiten gewährleistet ist, wird in weiterer vorteilhafter Ausgestaltung der Erfindung vorgeschlagen, dass die Trägereinheiten für Platinen, Erweiterungs-, Steckkarten oder Stromversorgungseinheiten mit mehreren Lüftungsöffnungen, beispielsweise durch offene Wandteile, ausgestattet sind, wobei die Lüftungsöffnungen vorzugsweise in der unteren und oberen Seite der Trägereinheit ausgebildet sind.

In weiterer besonderer Ausgestaltung der Erfindung ist vorgesehen, dass die Trägereinheiten mit stiftähnlichen Befestigungsvorrichtungen aus identischen und/oder unterschiedlichen Bauteilen bestehen, beispielsweise aus zwei länglichen und flachen Blechen, aus denen die stiftähnlichen Befestigungsvorrichtungen hervorstehen, wobei die Bleche der Trägereinheit mit stiftähnlichen Befestigungsvorrichtungen an mindestens einer langen Seite mindestens ein abgewinkeltes Trägerteil über die gesamte Länge aufweisen oder dass das abgewinkelte Bestandteil der Trägereinheit mit stiftähnlichen Befestigungsvorrichtungen einen Teil eines Gehäusewandteils bildet und längliche und flache Bleche der Trägereinheit mit stiftähnlichen Befestigungsvorrichtungen in der Länge an die Höhe angepasst sind, die mehrere übereinander liegende Computerfunktionseinheiten im 5,25-Zoll-Format aufweisen, zuzüglich einem oberen und unteren Abstand zur Gehäusewand.

Der abgewinkelte Teil der Trägereinheit bildet in vorteilhafter Ausgestaltung einen Teil eines Gehäusewandteils. Die länglichen und flachen Bleche sind hierbei in der Länge an die Höhe mehrerer übereinander liegender Computerfunktionseinheiten im 5,25-Zoll-Format angepasst. Die Breite der länglichen und flachen Bleche ist hierbei größer als der Abstand der Innengewinde in normierten Positionen an einer Computerfunktionseinheit. Die Breite kann hierbei beispielsweise 5 mm plus dem Abstand entsprechen, den das am weitesten entfernte Innengewinde in normierten Positionen einer 5,25-Zoll-Computerfunktionseinheit von der Außenseite des Frontwandteils eines Computergehäuses aufweist. Die Breite sollte aber mindestens 5 mm plus dem Abstand entsprechen, den die näher an dem Frontwandteil liegenden Innengewinde in normierten Positionen einer 5,25-Zoll-Computerfunktionseinheit von der Außenseite des Frontwandteils eines Computergehäuses aufweisen. Die angegebenen Größen sind wieder nur beispielhaft anzusehen und können in einzelnen Fällen von den vorgeschlagenen Größen abweichen. Um eine stabile Fixierung der Computerfunktionseinheiten durch die stiftähnlichen Befestigungsvorrichtung zu gewährleisten wird vorgeschlagen, das die stiftähnlichen Befestigungsvorrichtungen zwischen 6 und 7 mm aus der Oberfläche der Trägereinheit oder ggf. Teilen des Computergehäuses herausragen, sodass die Möglichkeit des Einbaus von schwingungsdämpfenden Elementen zwischen Computerfunktionseinheit und Trägereinheit bzw. Teilen des Computergehäuses gegeben ist. Kann hingegen auf schwingungsdämpfende Elemente verzichtet werden reichen Längen zwischen 3 und 4 mm der stiftähnlichen Befestigungsvorrichtungen aus.

Der besondere Vorteil der Erfindung liegt darin, das standardisierte Trägereinheiten für ebenfalls standardisierte Steckkarten in handelsüblichen Computergehäusen eingesetzt werden können und somit die Kosten für einen Computer mit diesen Steckkarten reduziert werden. Als besonders vorteilhaft ist anzusehen, das kein festgelegter Platz für die Trägereinheiten für Steckkarten, Erweiterungskarten oder Stromversorgungseinheiten vorgesehen werden muss, weil die Trägereinheiten an verschiedenen Stellen in das Computergehäuse integriert und befestigt werden können. Als besonders vorteilhaft ist hierbei anzusehen, dass die kleinste Trägereinheit eine Größe aufweist, die der von normierten Computerfunktionseinheiten, beispielsweise im 3,5 oder 5,25-Zoll-Format entspricht.

Ein weiterer wesentlicher Vorteil eines derartigen Computergehäuses besteht darin, dass dieses aus möglichst wenigen, gleichartigen Gehäusebauteilen, wie Gehäuserahmenteile, Gehäusewandteilen und Trägereinheiten für Computerfunktionseinheiten besteht. Dies führt zu einer Reduzierung der Gehäusebauteile und somit zu einer wesentlichen Kostenreduzierung. Vorzugsweise werden hierbei Rückwandteile und Frontwandteile des Computergehäuses verwendet, die annähernd identisch sind und bereits Teile des Gehäuserahmens bilden, sodass eine nicht zu vernachlässigende Materialeinsparung und die Senkung von Herstellungskosten möglich ist. Wie bei dem bekannten Stand der Technik können selbstverständlich die Front- und Rückwandteile sowie die Seitenteile mit entsprechenden Kunststoffblenden oder Abdeckungen versehen werden, wobei sowohl die Blenden und Abdeckungen bzw. Rückwand- und Frontwandteile mit entsprechend großen Öffnungen zur Aufnahme der Trägereinheiten ausgebildet sind. Für besondere Anlässe kann hierbei auch vorgesehen sein, dass das Computergehäuse aufklappbar oder einzelne Teile dreh- und schwenkbar aufgenommen sind, sodass der Benutzer des Computers sehr leicht Wartungsarbeiten durchführen kann. Selbstverständlich besteht auch die Möglichkeit mehrere gleichartige Computergehäuse nebeneinander oder übereinander miteinander zu verbinden, und somit größere Einheiten zu schaffen. Ein großer Vorteil besteht auch darin, das in eine einheitlichen Größe einer Trägereinheit Stromversorgungseinheiten, Erweiterungskarten, Platinen oder dergleichen einsetzbar sind und somit die Positionen den Wünschen des Kunden entsprechend jederzeit verändert oder angepasst werden kann. Dies wird auch dadurch unterstützt das beispielsweise die für das Computergehäuse notwendige Steuerungselektronik ebenfalls in einer Trägereinheit aufgenommen ist und somit variabel innerhalb des Computergehäuses plaziert werden kann. Die Erfindung zeigt im Weiteren auf, das eine Vielzahl der standardisierten Trägereinheiten durch Verbindungselemente untereinander verbunden sein können, hierzu bietet sich beispielsweise die Verwendung von entsprechend dimensionierten Steck- und Buchsenleisten an.

Weitere vorteilhafte Merkmale der Erfindung ergeben sich aus der nachfolgenden Beschreibung anhand der Figuren.

Es zeigt
- Figur 1: eine perspektivische Ansicht eines ersten Ausführungsbeispiels einer stiftähnlichen Befestigungsvorrichtung mit rundem Querschnitt,
- Figur 2: eine perspektivische Ansicht eines weiteren Ausführungsbeispiels einer stiftähnlichen Befestigungsvorrichtung mit einem fünfeckigen Querschnitt,
- Figur 3: eine perspektivische Ansicht eines weiteren Ausführungsbeispiels einer stiftähnlichen Befestigungsvorrichtung mit einem viereckigen Querschnitt,
- Figur 4: eine perspektivische Teilansicht einer stiftähnlichen Befestigungsvorrichtung, die aus einem Wandteil der Trägereinheit gebildet ist,
- Figur 5: eine perspektivische Darstellung gemäß Figur 4 mit einem zu Trägereinheit hin liegenden aufgesetzten Ring aus elastischen Material,
- Figur 6: eine perspektivische Darstellung eines weiteren Ausführungsbeispieles einer stiftähnlichen Befestigungsvorrichtung mit dreieckförmigem Querschnitt,
- Figur 7: eine perspektivische Darstellung eines besonderen Ausführungsbeispieles einer stiftähnlichen Befestigungsvorrichtung, die einen Gewindeabschnitt und einen glatten Stiftabschnitt aufweist,
- Figur 8: eine perspektivische Darstellung einer Computerfunktionseinheit im 3,5-Zoll-Format,
- Figur 9: eine perspektivische Darstellung eines Ausführungsbeispiel einer Computerfunktionseinheit im 5,25-Zoll-Format,
- Figur 10: eine perspektivische Darstellung eines Teils einer Computerfunktionseinheit im 5,25-Zoll-Format mit Innengewinde in normierten Positionen mit einer gegenüber liegenden stiftähnlichen Befestigungsvorrichtung,
- Figur 11: eine perspektivische Ansicht einer zweiteiligen, geöffneten Trägereinheit für Computerfunktionseinheiten vor der Montage einer 5,25-Zoll-Computerfunktionseinheit,
- Figur 12: eine perspektivische Darstellung eines Einbaurahmens im 5,25-Zoll-Format zum Einbau von 3,5-Zoll-Computerfunktionseinheiten,
- Figur 13: eine perspektivische Darstellung einer Computerfunktionseinheiten, welche zwei übereinander liegende Einbauplätze für 3,5-Zoll-Computerfunktionseinheiten benötigt,
- Figur 14: eine perspektivische Darstellung gemäß Figur 11 nach der Montage mit einer 5,25-Zoll-Computerfunktionseinheit,
- Figur 15: eine perspektivische Darstellung einer Trägereinheit nach der Montage mit einer 3,5-Zoll-Computerfunktionseinheit,
- Figur 16: eine perspektivische Darstellung eines Ausführungsbeispieles für die Befestigung einer 5,25-Zoll-Computerfunktionseinheit und eines 5,25-Zoll-Einbaurahmens mit stiftähnlichen Befestigungsvorrichtungen für 3,5-Zoll-Computerfunktionseinheiten in einer Trägereinheit für Computerfunktionseinheiten, die horizontal nutzbar ist,
- Figur 17: eine perspektivische Darstellung eines Ausführungsbeispiels gemäß Figur 16 zur Aufnahme von 3,5-Zoll-Computerfunktionseinheiten,
- Figur 18: eine perspektivische Ansicht eines Ausführungsbeispieles für eine weitere Trägereinheit mit stiftähnlichen Befestigungsvorrichtungen für beispielsweise eine Hauptplatine mit Innengewinden in normierten Positionen sowie ein Ausführungsbeispiel für eine Stromversorgungseinheit,
- Figur 19: eine perspektivische Ansicht einer Kombination von zwei Trägereinheiten für Computerfunktionseinheiten im 3,5 oder 5,25-Zoll-Format,
- Figur 20: eine perspektivische Ansicht einer Trägereinheit mit stiftähnlichen Befestigungsvorrichtungen, die aus mehreren Einzelteilen besteht, wobei diese zur Aufnahme der in der Figur 18 dargestellten Trägereinheiten vorgesehen ist,
- Figur 21: eine perspektivische Darstellung einer entfernbaren Trägereinheit mit stiftähnlichen Befestigungsvorrichtungen für Computerfunktionseinheiten zur Aufnahme in einem Computergehäuse,
- Figur 22: eine perspektivische Ansicht einer Trägereinheit, welche horizontal oder vertikal über die stiftähnlichen Befestigungsvorrichtungen montierbar ist,
- Figur 23: eine perspektivische Ansicht eines Ausführungsbeispieles für zwei Trägereinheiten für Computerfunktionseinheiten, deren erste Teile fest mit dem liegenden Gehäuserahmen verbunden sind, während die zweiten Teile fest mit einem Gehäusedeckel verbunden sind,
- Figur 24: eine perspektivische Ansicht des Ausführungsbeispiels gemäß Figur 23 mit montierten 5,25-Zoll-Computerfunktionseinheiten nach der Montage,
- Figur 25: eine perspektivische Darstellung eines nur aus wenigen Bauteilen aufgebauten Computergehäuses in einer Einzelteildarstellung, wobei die einsetzbaren Computerfunktionseinheit über die stiftähnlichen Befestigungsvorrichtungen gehalten werden,
- Figur 26: eine perspektivische Darstellung einer Trägereinheit für Steckkarten mit Verbindungsplatinen oder Stromversorgungseinheiten,
- Figur 27: eine perspektivische Darstellung einer Trägereinheit mit 5,25 Zoll-Einbauschächten,
- Figur 28: eine perspektivische Darstellung eines Computergehäuses mit einer Trägereinheit gemäß Figur 27,
- Figur 29: eine perspektivische Darstellung eines geöffneten Computergehäuses mit einer montierten Trägereinheit gemäß Figur 27 und einer montierten Trägereinheit gemäß Figur 26,
- Figur 30: eine perspektivische Darstellung eines Ausführungsbeispieles einer Trägereinheit für Steckkarten mit Verbindungsplatinen, die mit Führungsschienen und einer Verbindungsplatine bestückt ist,
- Figur 31: eine perspektivische Darstellung eines Ausführungsbeispieles gemäß Figur 30 mit vertikal montierten Steckkarten halber Bauhöhe,
- Figur 32: eine perspektivische Darstellung eines Ausführungsbeispieles gemäß Figur 30 mit horizontal montierten Steckkarten halber Bauhöhe,
- Figur 33: eine perspektivische Darstellung eines Ausführungsbeispieles einer weiteren Trägereinheit für Steckkarten mit Verbindungsplatinen mit horizontal montierten Steckkarten halber Bauhöhe,
- Figur 34: eine perspektivische Darstellung eines Ausführungsbeispieles einer weiteren Trägereinheit gemäß Figur 33 und mit horizontal montierten Steckkarten halber Bauhöhe und größerer Länge,
- Figur 35: eine perspektivische Darstellung der Anordnung von Gehäuserahmenteilen, Gehäusewandteilen und Trägereinheiten zu einem Ausführungsbeispiel eines Computergehäuses,
- Figur 36: eine perspektivische Darstellung eines Ausführungsbeispieles eines montierten Computergehäuses gemäß Figur 35, bei dem ein Seitenwandteil entfernt wurde, damit das Innere sichtbar ist,
- Figur 37: eine perspektivische Darstellung eines Ausführungsbeispieles eines Computergehäuses mit montierten Computerfunktionseinheiten,
- Figur 38: eine perspektivische Darstellung eines geöffneten Computergehäuses mit zwei Trägereinheiten mit 5,25-Zoll-Einbauschächten, wobei in einer der Trägereinheiten das Ausführungsbeispiel einer Trägereinheit für Platinen mit Erweiterungskarten montiert ist und
- Figur 39: eine perspektivische Darstellung von drei zusammengefügten Gehäusen für Stromversorgungseinheiten von Computern in einer Montagevorrichtung, wobei das obere Gehäuse zusätzlich eine Steuerungselektronik umfasst.

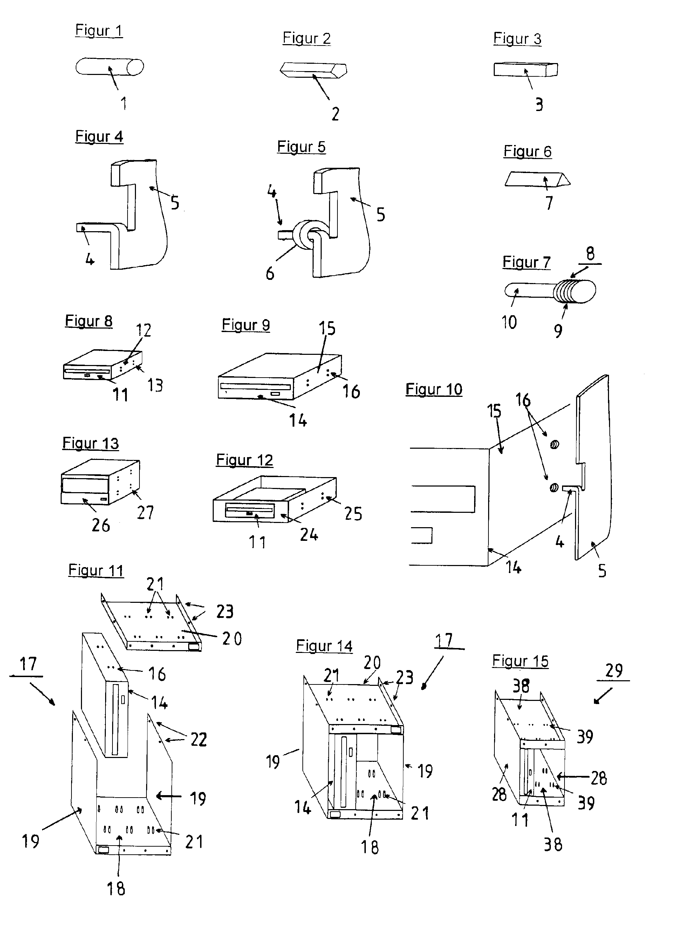

Figur 1 zeigt eine perspektivische Ansicht eines Ausführungsbeispiels einer stiftähnlichen Befestigungsvorrichtung 1 mit einem runden Querschnitt.

Die Figur 2 zeigt eine perspektivische Ansicht eines Ausführungsbeispiels einer stiftähnlichen Befestigungsvorrichtung 2 mit einem fünfeckigen Querschnitt.

Figur 3 zeigt eine perspektivische Ansicht eines Ausführungsbeispiels einer stiftähnlichen Befestigungsvorrichtung 3 mit viereckigem Querschnitt.

Figur 4 zeigt eine perspektivische Teilansicht eines Ausführungsbeispiel einer stiftähnlichen Befestigungsvorrichtung 4, die aus einem Wandteil 5 einer Trägereinheit durch Ausstanzen und Umbiegen herausgearbeitet ist, wobei die Befestigungsvorrichtung 4 einen quadratischen Querschnitt aufweist.

Figur 5 zeigt in einer perspektivische Teilansicht das Ausführungsbeispiel gemäß Figur 4 mit einer stiftähnlichen Befestigungsvorrichtung 4, wobei auf die Befestigungsvorrichtung 4 ein Ring 6 aus elastischem Material zur Schwingungsdämpfung aufgeschoben ist. Alternativ besteht die Möglichkeit die stiftähnliche Befestigungsvorrichtung 4 mit einem elastischem Material zu überziehen.

Die Figur 6 zeigt in einer perspektivische Darstellung ein weiteres Ausführungsbeispiel einer stiftähnlichen Befestigungsvorrichtung 7 mit einem dreieckförmigen Querschnitt.

Figur 7 zeigt ebenfalls in einer perspektivischen Darstellung ein weiteres besonderes Ausführungsbeispiel einer stiftähnlichen, einteiligen Befestigungsvorrichtung 8, welche aus einem Gewindeteil 9 und einem glatten Stiftteil 10 besteht. Sowohl das Gewindeteil 9 als auch das Stiftteil 10 sind hierbei einstückig ausgebildet, wobei der Durchmesser des Gewindeteils 9 größer als der des Stiftteils 10 ausgebildet ist und somit in vorhandene Gewindebohrungen der Computerfunktionseinheit, Trägereinheiten oder Teile des Computergehäuses eingeschraubt werden kann.

Figur 8 zeigt in einer perspektivischen Darstellung eine Computerfunktionseinheit 11 im 3,5-Zoll-Format, wobei die Seitenflächen 12 mit Gewindebohrungen 13 in normierten Positionen ausgestattet sind.

Figur 9 zeigt in einer perspektivische Darstellung ein weiteres Ausführungsbeispiel einer Computerfunktionseinheit 14 im 5,25-Zoll-Format mit Seitenflächen 15, in denen ebenfalls Gewindebohrungen 16 in normierten Positionen vorhanden sind.

Figur 10 zeigt in einer perspektivische Teilansicht eine Computerfunktionseinheit 14 und ein Wandteil 5 gemäß Figur 4. An den Seitenflächen 15 befinden sich die Gewindebohrungen 16, in welche die stiftähnliche Befestigungsvorrichtung 4 zur Montage eingreifen kann. Die Teilansicht zeigt die Computerfunktionseinheit 14 und das Wandteil 5 vor der Montage.

Figur 11 zeigt in einer perspektivischen Darstellung ein weiteres Ausführungsbeispiel einer geöffneten Trägereinheit 17, welche zweiteilig aufgebaut ist. Ein erstes Teil der Trägereinheit 17 besteht aus einem Seitenblech 18 mit zwei hieran befestigten Abdeckblechen 19 als oberer und unterer Abschluss sowie einem weiteren herausnehmbaren Seitenblech 20. Das Seitenblech 18 weist mehrere Befestigungsvorrichtungen 21 auf, welche in normierten Abständen, entsprechend den Gewindebohrungen 16 der Computerfunktionseinheiten 14 angeordnet sind. Eine ebenfalls dargestellte Computerfunktionseinheit 14 mit Gewindebohrungen 16 kann somit stehend in die Trägereinheit 17 eingesetzt werden und nach der Montage von einer oder mehrerer Computerfunktionseinheiten 14 kann mit dem zweiten Seitenblech 20 eine Fixierung der Computerfunktionseinheiten 14 vorgenommen werden. Hierzu greifen die in den Seitenblechen 18, 20 vorhandenen Befestigungsvorrichtungen 21 in die normierten Gewindebohrungen 16 der Computerfunktionseinheiten 14 ein. Die Verbindung des Seitenbleches 20 mit dem oberen und unteren Abdeckblech 19 kann im Weiteren durch Befestigungsmittel, beispielsweise einer Befestigungsvorrichtung 8 gemäß Figur 7 in der Trägereinheit 17 fixiert werden. Hierzu können die vorhandenen Bohrungen 22 des oberen und unteren Abdeckbleches 19 sowie die Gewindebohrungen 23 des Seitenbleches 20 verwendet werden. Alternative besteht die Möglichkeit einer Schraubbefestigung.

Figur 12 zeigt ein Ausführungsbeispiel für einen Einbaurahmen 24 im 5,25-Zoll-Format, der eine 3,5-Zoll-Computerfunktionseinheit 11 aufnehmen kann. Die 3,5-Zoll-Computerfunktionseinheit 11 ist mit nicht dargestellten stiftähnlichen Befestigungsvorrichtungen innerhalb des Einbaurahmens 24 befestigt. Der Einbaurahmen 24 kann im Weiteren mit seinen Gewindebohrungen 25 in einer Trägereinheit mit stiftähnlichen Befestigungsvorrichtungen montiert und aufgenommen werden.

Figur 13 zeigt in einer perspektivischen Darstellung ein Ausführungsbeispiel für eine Computerfunktionseinheit 26 welche zwei übereinander liegende Einbauplätze für 3,5-Zoll-Computerfunktionseinheiten benötigt. Die Gewindebohrung 27 sind ebenfalls in normierten Positionen zur Montage in einer Trägereinheit mit stiftähnlichen Befestigungsvorrichtungen angeordnet.

Figur 14 zeigt in einer perspektivischen Darstellung eine montierte und teilweise bestückte Trägereinheit 17 gemäß Figur 11 nach der Montage. Die Trägereinheit 17 ist zur Aufnahme von 5,25-Zoll-Computerfunktionseinheiten 14 oder aber zur Aufnahme von Einbaurahmen 24 vorgesehen, wobei die Befestigung durch die Befestigungsvorrichtungen 21 erfolgt, welche in die korrespondierenden normierten Gewindebohrungen 16 der Computerfunktionseinheit 14 bzw. in die normierten Gewindebohrungen 25 des Einbaurahmens 24 eingreifen.

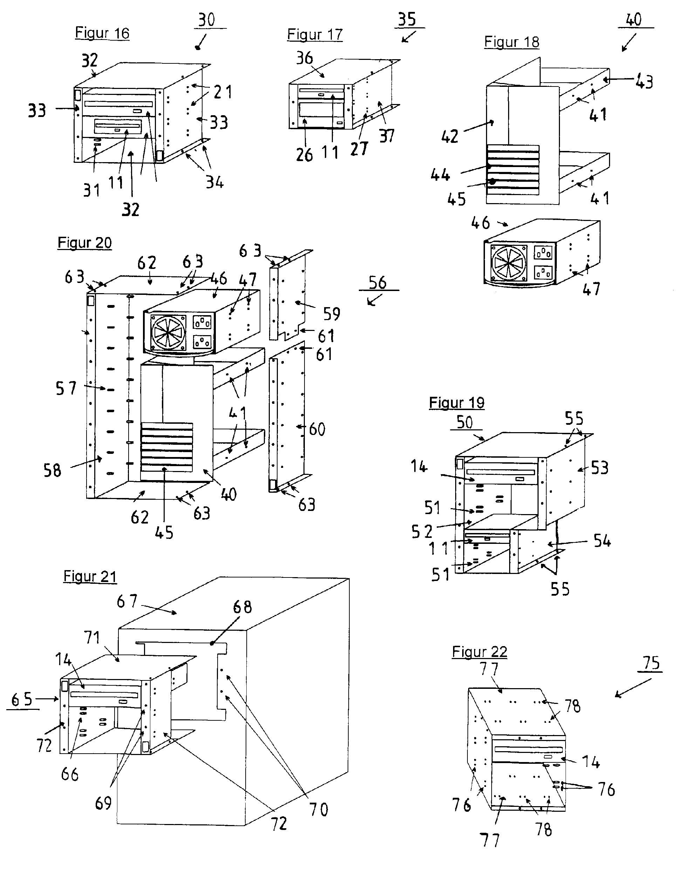

Figur 15 zeigt in einer perspektivischen Darstellung ein weiteres Ausführungsbeispiel einer Trägereinheit 29 für die Befestigung einer oder mehrerer 3,5-Zoll-Computerfunktionseinheiten 11. Die Trägereinheit 29 besteht, wie die Trägereinheit 17 gemäß Figur 11 und 14 aus Seitenblechen 38 mit Befestigungsvorrichtungen 39 und einem unteren und oberen Abdeckblech 28, wobei die Befestigungsvorrichtungen 39 in die normierten Gewindebohrungen 13 der Computerfunktionseinheit 11 nach der Montage eingreifen. Die Trägereinheit 17, 29 können in einem Computergehäuse sowohl vertikal als auch horizontal aufgenommen werden und erhöhen somit die Variabilität bei der Montage.

Figur 16 zeigt ein weiteres Ausführungsbeispiel einer Trägereinheit 30 in einer perspektivischen Darstellung für die Befestigung einer 5,25-Zoll-Computerfunktionseinheit 14, die beispielsweise vertikal genutzt wird. Die stiftähnlichen Befestigungsvorrichtungen 31 dienen wie in den vorgenannten Fällen zur Befestigung der Computerfunktionseinheiten 14 bzw. eines Einbaurahmens 24, wobei die Befestigungsvorrichtungen 31 in die normierten Gewindebohrungen eingreifen. Die Trägereinheit 30 besteht ebenfalls aus einem oberen und unteren Abdeckblech 32 sowie zwei Seitenblechen 33, welche ggf. miteinander verschraubt oder durch Befestigungsvorrichtungen gegenseitig gehalten sind. Gewindebohrungen 34 sind im Weiteren zur Befestigung der Trägereinheit 30 innerhalb des Computergehäuses vorgesehen.

In Figur 17 zeigt eine perspektivische Darstellung eines weiteren Ausführungsbeispieles einer Trägereinheit 35, welche für 3,5-Zoll-Computerfunktionseinheiten 11 bzw. 26 vorgesehen ist. Wie in den vorgenannten Beispielen weist auch die Trägereinheit 35 ein oberes und unteres Abdeckblech 36 sowie zwei Seitenbleche 37 mit Befestigungsvorrichtungen 39 auf.

Figur 18 zeigt eine perspektivische Darstellung eines weiteren Ausführungsbeispieles für eine Trägereinheit 40, welche mit nicht dargestellten stiftähnlichen Befestigungsmittel für Hauptplatinen und mit Gewindebohrungen 41 in normierten Positionen ausgestattet ist. Die Trägereinheit 40 ist beispielsweise zur Montage eines Motherboards vorgesehen und besteht im wesentlichen aus einem rechtwinkligen Blechteil 42 sowie weiteren Rahmenteilen 43. In den Rahmenteilen 43 sind die normierten Gewindebohrungen 41 aufgenommen, während das rechtwinklige Blechteil 42 zur Montage des Motherboards und eventueller Erweiterungskarten vorgesehen ist und zu diesem Zweck schlitzförmige Öffnungen 44 sowie Abdeckbleche 45 aufweist. Nach Entfernen der Abdeckbleche 45 können an den entsprechenden Positionen die Erweiterungskarten mit Abschlussblechen eingesteckt werden. Unterhalb der Trägereinheit 40 ist ein Ausführungsbeispiel eines Netzteiles 46 mit normierten Gewindebohrungen 47 dargestellt, welches ebenfalls durch Befestigungsvorrichtungen der Trägereinheiten bzw. Computergehäuseteile befestigt werden kann. Im gezeigten Ausführungsbeispiel weist das Netzteil 46 die doppelte Bauhöhe einer 5,25-Zoll-Computerfunktionseinheit auf.

Figur 19 zeigt eine perspektivische Darstellung eines Ausführungsbeispieles für die Befestigung einer 3,5-Zoll-Computerfunktionseinheit 11 und einer 5,25-Zoll-Computerfunktionseinheit 14, wobei die verwendete Trägereinheit 50 mit stiftähnlichen Befestigungsvorrichtungen innerhalb des Computergehäuses gehalten werden kann. Ebenso werden die Computerfunktionseinheiten 11, 14 durch stiftähnliche Befestigungsvorrichtungen 51 in den Seitenblechen 52, 53, 54 gehalten. Im gezeigten Ausführungsbeispiel ist jeweils eine 3,25-Zoll-Computerfunktionseinheit 11 sowie eine 5,25-Zoll-Computerfunktionseinheit 14 aufgenommen, wobei weitere Einbauplätze freigehalten wurden und nachträglich belegt werden können. Die Trägereinheit 50 weist im Weiteren Gewindebohrungen 55 zur Befestigung innerhalb des nicht dargestellten Computergehäuses auf.

Figur 20 zeigt in einer perspektivischen Explorationsdarstellung eine weitere Trägereinheit 56, welche mit stiftähnlichen Befestigungsvorrichtungen 57 zur Aufnahme weiterer Trägereinheiten oder Computerfunktionseinheiten, hier einer Trägereinheit 40 und einem Netzteil 46, vorgesehen ist. Die Trägereinheit 56 besteht aus einem einteiligen Seitenblech 58 auf der einen Seite und zwei weiteren Seitenblechen 59, 60 auf der anderen Seite, wobei die Seitenbleche 59, 60 ebenfalls durch Befestigungsvorrichtungen bzw. Fixiervorrichtungen 61 miteinander verbunden werden können. Den oberen und unteren Abschluss bildet jeweils ein Abdeckblech 62, sodass insgesamt gesehen eine kompakte und leicht montierbare Trägereinheit 56 entsteht. In den Seitenblechen 58 befinden sich mehrere Befestigungsvorrichtungen 57 zur Aufnahme der Trägereinheit 40 bzw. des Netzteiles 46, welche in Gewindebohrungen 41 bzw. 47 nach der Montage eingreifen. Die Befestigung des oberen und unteren Abdeckbleches 42 an den Seitenblechen 58, 59, 60 erfolgt durch Gewindebohrungen 63, welche eine Verschraubung der Seitenbleche 58, 59, 60 mit einem oberen und unteren Abdeckblech 62 ermöglichen. Die Trägereinheit 56 kann die in Figur 18 dargestellten Ausführungsbeispiele für Computerfunktionseinheiten aufnehmen, wobei die einzusetzende Trägereinheit 40 für Hauptplatinen und das einzusetzende Netzteil 46 mit ihren Gewindebohrungen 41 bzw. 47 in normierten Positionen dargestellt sind. Die Trägereinheit 56 weist in vorteilhafter Weise nur wenige Einzelkomponenten auf, welche ein Größtmaß an Variabilität dem Benutzer ermöglichen und darüber hinaus auf Grund der vorliegenden Konstruktion einen leichten Austausch der Trägereinheiten 40 bzw. Netzteile 46 ermöglichen.

Figur 21 zeigt eine perspektivische Darstellung eines weiteren Ausführungsbeispieles einer entfernbaren Trägereinheit 65 mit stiftähnlichen Befestigungsvorrichtungen 66 für Computerfunktionseinheiten 14. Im gezeigten Ausführungsbeispiel ist eine Computerfunktionseinheit 14 in die Trägereinheit 65 eingesetzt. Die Trägereinheit 65 kann im Weiteren in einem Computergehäuse 67 aufgenommen werden, welches eine entsprechende Öffnung 68 auf der Vorderseite aufweist. Die Trägereinheit 65 weist ferner Befestigungsbohrungen 69 auf, welche mit Gewindebohrungen 70 des Computergehäuses 67 korrespondieren und zur Befestigung innerhalb des Computergehäuses 67 vorgesehen sind. Wie die zuvor gezeigten Trägereinheiten besteht die Trägereinheit 65 auch aus wenigen und identischen Bauelementen. Es handelt sich um ein oberes und unteres Abdeckblech 71 sowie Seitenbleche 72.

Figur 22 zeigt in einer perspektivischen Darstellung eine Trägereinheit 75 mit stiftähnlichen Befestigungsvorrichtungen 76 die korrespondierend zu den Gewindebohrung 16 der Computerfunktionseinheit 14 angeordnet sind. Im Weiteren sind die oberen und unteren Bleche 77 der Trägereinheit 75 mit Gewindebohrungen 78 in normierten Positionen ausgestattet, sodass die Trägereinheit 75 vertikal oder horizontal durch weitere Befestigungsvorrichtungen größerer Trägereinheiten oder des Computergehäuses aufgenommen und fixiert werden kann. Insofern besteht eine Montagemöglichkeit der Trägereinheit 75 in vielfältiger Weise innerhalb des Computergehäuses, wobei ggf. auch eine vertikale oder horizontale Verwendung vorgesehen ist, sodass das jeweilige Computergehäuse stehend oder liegend eingesetzt werden kann.

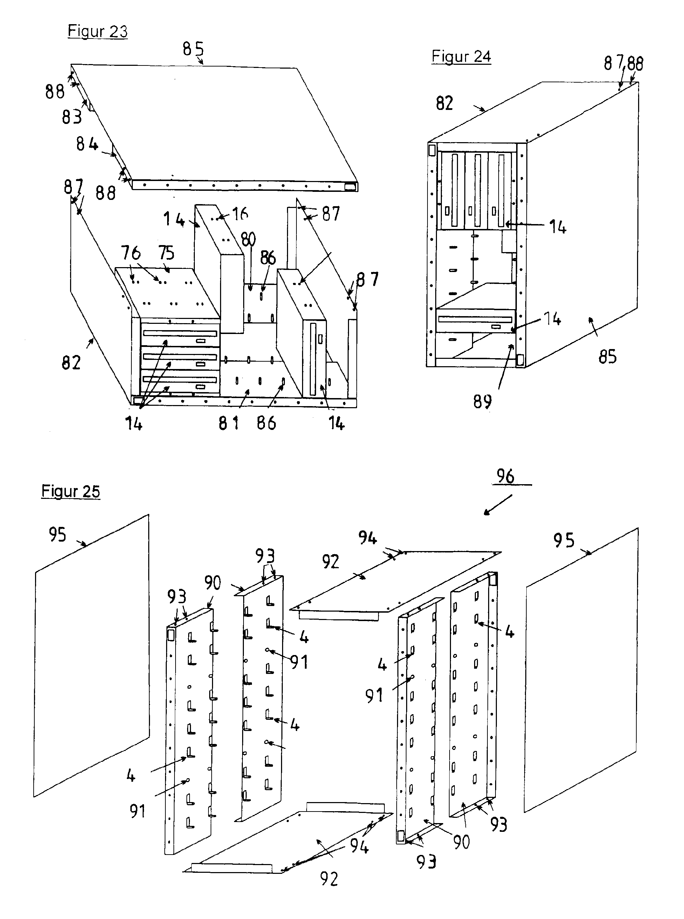

Figur 23 zeigt eine perspektivische Darstellung eines weiteren Ausführungsbeispieles zweier Trägereinheiten für Computerfunktionseinheiten, deren erste Teile 80, 81 fest mit dem liegenden Gehäuserahmen 82 verbunden sind, während die zweiten Teile 83, 84 fest mit einem Gehäusedeckel 85 verbunden sind. Der Gehäusedeckel 85 ist angehoben und man erkennt die auf die ersten Teile der Trägereinheit mit stiftähnlichen Befestigungsvorrichtungen 86 aufgesetzten Computerfunktionseinheit 14 und Trägereinheit 75 für weitere Computerfunktionseinheiten 14. Wenn der Gehäusedeckel 85 auf den Gehäuserahmen 82 aufgesetzt wird, greifen die nicht dargestellten stiftähnlichen Befestigungsvorrichtungen der zweiten Teile 83, 84 der Trägereinheit mit stiftähnlichen Befestigungsvorrichtungen in die Gewindebohrung 16 der Computerfunktionseinheiten 14 und einer beispielhaft dargestellten Trägereinheit 75 ein. Der Gehäusedeckel 85 wird mit den Fixierungsvorrichtungen 87, 88 an dem Gehäuserahmen 82 gehalten, wobei das Gehäuse bevorzugt liegend verwendet wird.

Figur 24 zeigt in einer perspektivischen Darstellung das Ausführungsbeispiel aus Figur 23 mit montierten 5,25-Zoll-Computerfunktionseinheiten 14 in einer vertikalen Position. Hierbei ist der Gehäuserahmen 82, der Gehäusedeckel 85 und die Fixierungsvorrichtungen 87, 88 erkennbar. Die Computerfunktionseinheiten 14 verschließen zumindestens teilweise die vordere Öffnung 89 des montierten Computergehäuses.

Figur 25 zeigt eine perspektivische Explorationsdarstellung eines Ausführungsbeispieles für ein Computergehäuse 96, welches aus vier exakt gleichen Blechen 90 mit stiftähnlichen Befestigungsvorrichtungen 4, die aus dem Blech durch Ausstanzen und Umbiegen herausgearbeitet wurden und mit Innengewinden 91 zur Aufnahme von nicht dargestellten stiftähnlichen Befestigungsvorrichtungen mit einem Gewinde und mit mindestens einem abgewinkelten Teil als zwei Trägereinheiten mit stiftähnlichen Befestigungsvorrichtungen mit mehreren aneinander liegenden 5,25-Zoll-Einbauplätzen verwendet werden, während sie gleichzeitig den Rahmen, einen Teil des Frontwandteiles und einen Teil des Rückwandteiles desselben Computergehäuses 96 bilden. Weiter sind zwei exakt gleiche untere und obere Wandteile 92 vorhanden, welche über Fixierungsvorrichtungen 93, 94 die einzelnen Bleche 90 der Trägereinheit miteinander verbinden. Anschließend werden weitere identische Wandteile 95 seitlich durch einstecken oder andere Befestigungsarten an dem Computergehäuse 96 als Abschluss befestigt. Hierdurch entsteht ein Computergehäuse 96 mit 2 Trägereinheiten, welche durch die exakt gleichen Bleche 90 gebildet werden und mit stiftähnlichen Befestigungsvorrichtungen 4 ausgestattet sind, wobei das Computergehäuse 96 aus lediglich drei unterschiedlichen Bauteilen zusammengesetzt ist. Zur Montage von Computerfunktionseinheiten besteht lediglich die Notwendigkeit, ein Blech 90 einer Trägereinheit mit stiftähnlichen Befestigungsvorrichtungen 4 zu lösen und die einzusetzende Computerfunktionseinheiten auf das verbliebene Blech 90 der Trägereinheit mit stiftähnlichen Befestigungsvorrichtungen 4 aufzustecken und im Anschluss das gelöste Blech 90 der Trägereinheit mit stiftähnlichen Befestigungsvorrichtungen 4 wieder zu montieren.

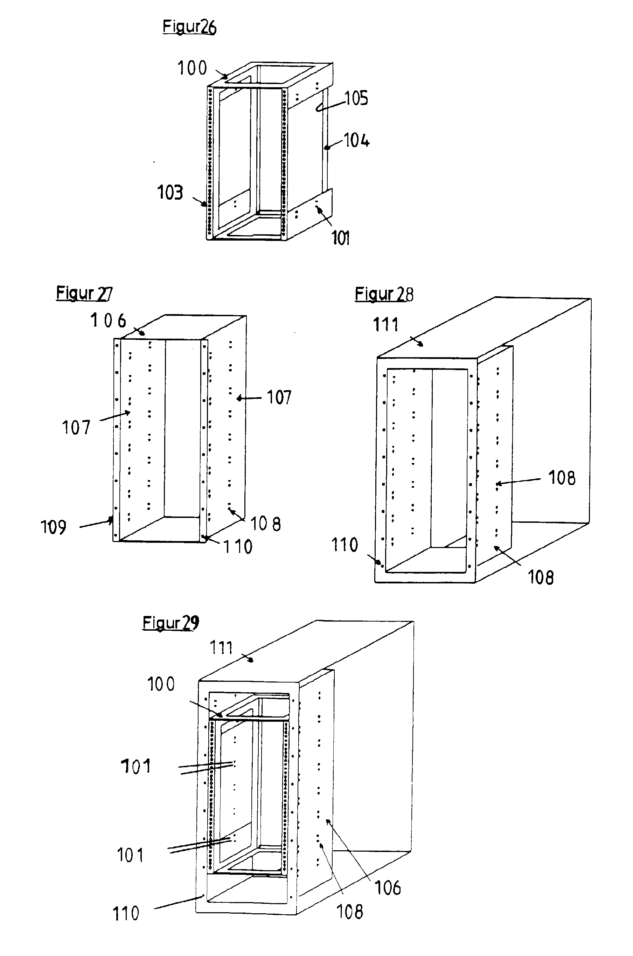

Figur 26 zeigt eine perspektivische Darstellung eines weiteren Ausführungsbeispieles einer Trägereinheit 100 für Steckkarten mit Verbindungsplatinen. Die Befestigungsmöglichkeiten zur Arretierung der Steckkarten sind in diesem Ausführungsbeispiel nicht gezeigt, während hingegen die normierten Gewindebohrungen 101 zur Befestigung der Trägereinheit 100 in mehreren aneinanderliegenden 5,25-Zoll-Einbauschächten vorhanden sind. Im Weiteren sind die Belüftungsöffnungen 102 und Träger 104 für Verbindungsplatinen zu erkennen. Sehr deutlich sind auch die großen seitlichen Öffnungen 105 in allen Wandteilen der Trägereinheit 100 zu erkennen, die der Belüftung und Kühlung dienen.

Figur 27 zeigt in einer perspektivische Darstellung eine weitere Trägereinheit 106, welche zur Aufnahme von mehreren 5,25-Zoll-Einbauschächten oder Computerfunktionseinheiten gemäß dem Stand der Technik vorgesehen ist. In den seitlichen Blechen 107 der Trägereinheit 106 sind Gewindebohrungen 108 zur Montage von beispielsweise stiftähnlichen Befestigungsvorrichtung gemäß dem Ausführungsbeispiel aus Figur 7 vorgesehen. Zur Befestigung der Trägereinheit 106 innerhalb eines Computers bzw. an den Rahmenteilen eines Computergehäuses sind in der vorderen abgewinkelten Kante 109 weitere Befestigungsbohrungen 110 vorgesehen.

Figur 28 zeigt in einer perspektivischen Darstellung ein geöffnetes Computergehäuses 111 mit einer Trägereinheit 106 gemäß Figur 27 mit 5,25-Zoll-Einbauschächten gemäß dem Stand der Technik. Sowohl die Trägereinheit 106 als auch die 5,25-Zoll-Einbauschächte bzw. Computerfunktionseinheiten können über die Gewindebohrung 108 der Trägereinheit 106 sowie weiteren Befestigungsbohrungen 110 lösbar in dem Computergehäuses 111 montiert werden.

Figur 29 zeigt ebenfalls ein geöffnetes Computergehäuse 111 mit identischen Befestigungsbohrung 110, in welche eine Trägereinheit 106 gemäß Figur 27 zur Aufnahme von 5,25-Zoll-Einbauschächten oder Computerfunktionseinheiten eingeschraubt ist. Im Weiteren ist in die Trägereinheit 106 eine Trägereinheit 100 gemäß Figur 26 aufgenommen und wird hierbei in die Trägereinheit 106 eingesetzt und durch die Befestigungsbohrungen 110 zur Aufnahme von Steckkarten fixiert.

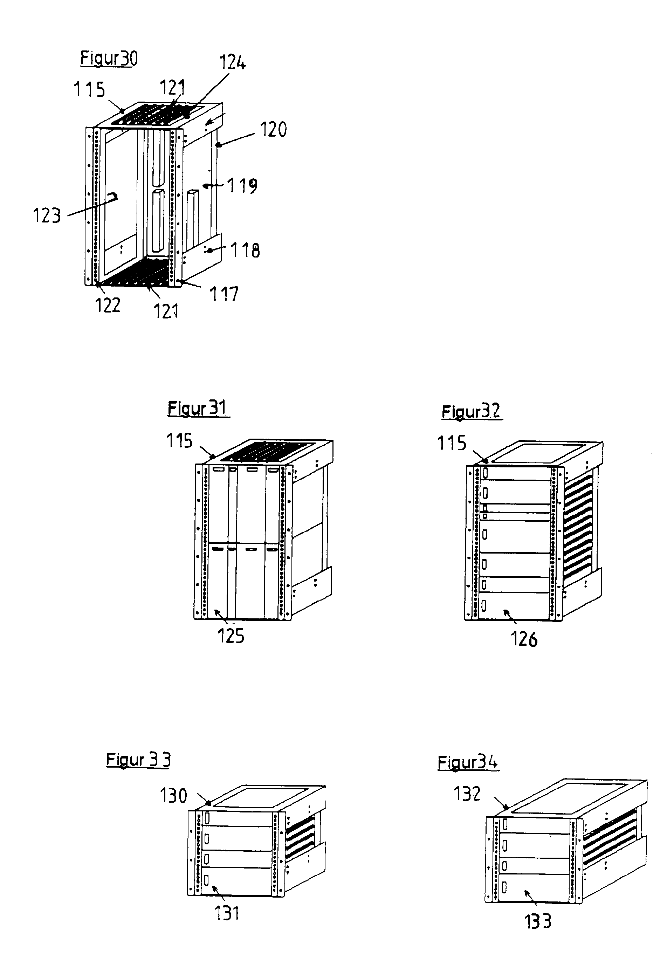

Die Figur 30 zeigt eine perspektivische Darstellung eines weiteren Ausführungsbeispieles einer Trägereinheit 115, welche für Steckkarten mit Verbindungsplatinen 119 vorgesehen ist. Die Befestigungsvorrichtungen 117, mit denen die Trägereinheit 115 für Steckkarten mit Verbindungsplatinen 119 an einer Öffnung für 5,25-Zoll-Computerfunktionseinheiten in einem Wandteil eines Computergehäuses befestigt werden kann und die Befestigungsvorrichtungen 118, mit denen die Trägereinheit 115 für Steckkarten in einer Trägereinheit mit 5,25-Zoll-Einbauschächten lösbar montiert werden kann, sind aus der Figur 30 erkennbar. Des Weiteren ist der Träger 120 für die Verbindungsplatine 119 und die Führungsschienen 121 für die nicht dargestellten Steckkarten erkennbar. Lüftungsöffnungen 122 dienen zur Kühlung und befinden sich in der Vorderseite der Trägereinheit 115. Besonderer Wert wurde auf die großen Öffnungen 123 in den Wandteilen der Trägereinheit 115 gelegt, damit eine ausreichende Kühlung der Steckkarten gewährleistet ist. Ebenso weisen die Wandteile mit den Führungsschienen 121 entsprechend groß dimensionierte Öffnungen 124 auf.

Figur 31 zeigt in einer perspektivischen Darstellung eine bestückte Trägereinheit 115 gemäß Figur 30 mit vertikal montierten Steckkarten 125 halber und ganzer Bauhöhe auf.

Figur 32 zeigt in einer perspektivischen Darstellung ebenfalls die Trägereinheit 115, wobei in diesem Fall horizontal angeordnete Steckkarten 126 halber und ganzer Bauhöhe eingesetzt sind.

Figur 33 zeigt in einer perspektivischen Darstellung eine kleinere Trägereinheit 130 mit horizontal montierten Steckkarten 131, während Figur 34 eine etwas größere Trägereinheit 132 mit horizontal montierten Steckkarten 133 halber und ganzer Bauhöhe zeigt.

Die Figur 34 zeigt eine perspektivische Darstellung eines weiteren Ausführungsbeispiels einer Trägereinheit 132 für Steckkarten 139. Die Trägereinheit 132 ist mit horizontal montierten Steckkarten 133 halber Bauhöhe mit größerer Länge bestückt.

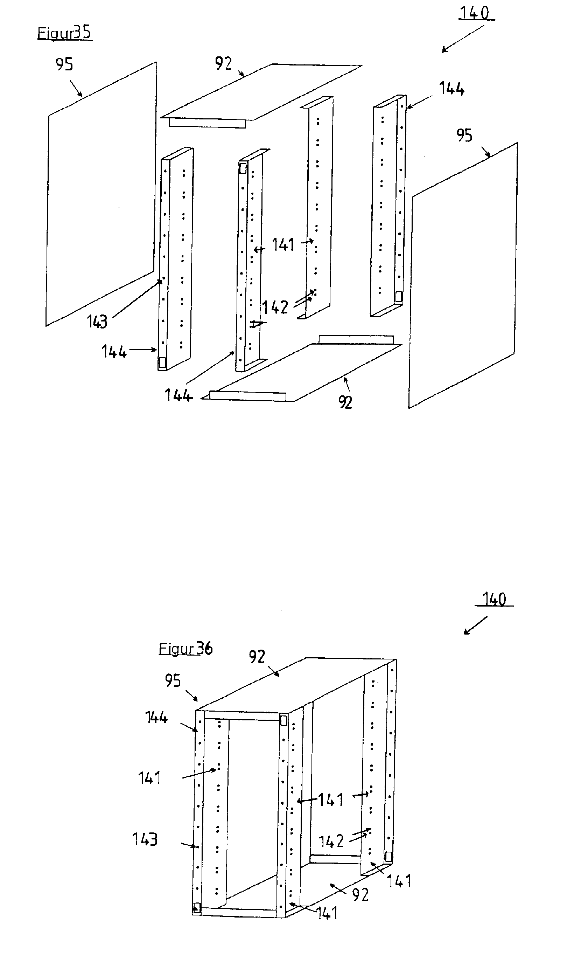

Figur 35 zeigt in einer perspektivischen Explorationsdarstellung ein Computergehäuse 140, welches weitestgehend dem Ausführungsbeispiel gemäß Figur 25 entspricht. Lediglich die mittleren vier gleichen Blechteile 141 weichen von der vorgenannten Ausführung ab, in dem anstelle von ausgearbeiteten Befestigungsvorrichtungen Gewindebohrungen 142 zum Einschrauben von Befestigungsvorrichtungen 8 gemäß Figur 7 vorgesehen sind. Im Weiteren befinden sich Gewindebohrungen 143 in den vorderen und hinteren Seitenkanten 144 zu Montage.

Figur 36 zeigt das Computergehäuses 140 nach der Montage zur Aufnahme von Trägereinheiten oder Computerfunktionseinheiten, welche ggf. auch durch weitere Befestigungsmittel in dem in der Vorderfront befindlichen Gewindebohrungen 143 befestigt werden können.

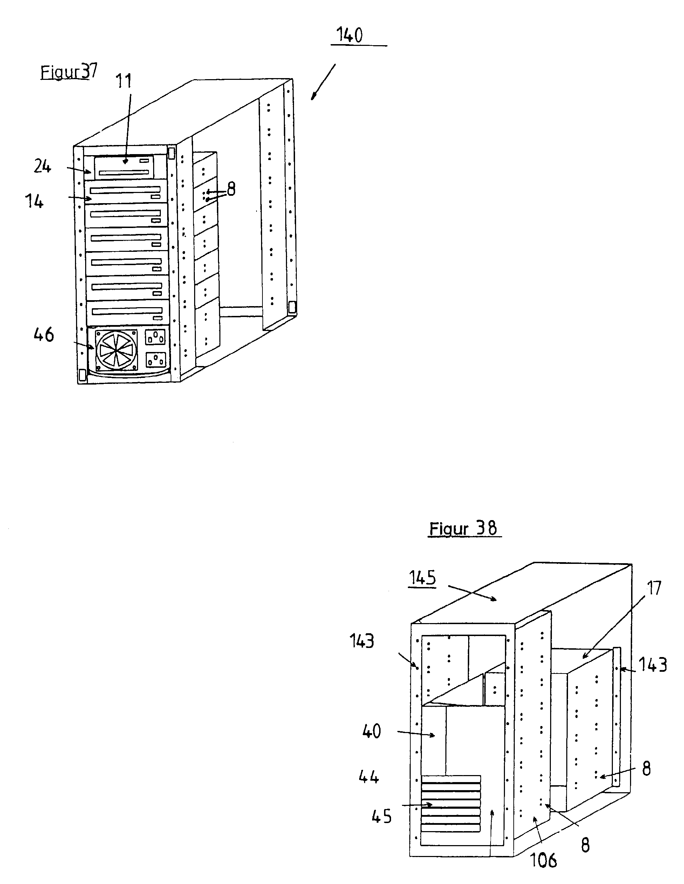

Figur 37 zeigt das aus Figur 36 bekannte Computergehäuse 140, welches mit 5,25-Zoll-Computerfunktionseinheiten 14, Einbaurahmen 24 zur Aufnahme von 3,25-Zoll-Computerfunktionseinheiten 11 sowie einem Netzteil 46 bestückt ist. Sämtliche der vorgenannten Computerfunktionseinheiten werden durch stiftähnliche Befestigungsvorrichtungen 8 seitlich fixiert und gehalten.

Figur 38 zeigt ein Computergehäuse 145, welches mit einer Trägereinheiten 40 sowie einer rückwärtig eingesetzten Trägereinheiten 17 ausgestattet ist. Die Trägereinheit 40 dient hierbei zur Aufnahme einer nicht dargestellten Platine mit eingesteckten Erweiterungskarten, welche hinter den Öffnungen 44 nach Entnahme der Abdeckblenden 45 angeordnet werden können. Die Trägereinheit 40 ist hierbei in einer Trägereinheit 106 aufgenommen, welche wiederum unmittelbar im Computergehäuse 145 befestigt ist. Zur Befestigung werden die bereits bekannten stiftähnlichen Befestigungsvorrichtungen gemäß den Figuren 1 bis 4 oder 6 und 7 verwendet.

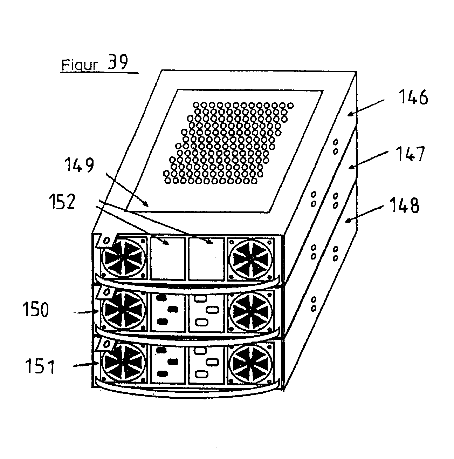

Figur 39 zeigt abschließend in einer perspektivischen Ansicht die Kombination mehrerer Gehäuse von Stromversorgungseinheiten 146, 147, 148 für Computer in ihren jeweiligen Montagevorrichtungen 149, 150, 151 in der Bauform von einer 5,25-Zoll-Computerfunktionseinheit halber Bauhöhe. In die beiden unteren Montagevorrichtungen 150, 151 ist nicht sichtbar eine Stromversorgungseinheit integriert, während in die obere Montagevorrichtungen 149 die notwendige Steuerungselektronik aufgenommen ist, damit sich die einzelnen Stromversorgungseinheiten die Stromversorgungslast des Computers teilen können und die einzelnen Stromversorgungseinheiten 147, 148 im Betrieb gewechselt werden können. Die nicht benötigten Öffnungen für Anschlüsse etc. sind hierbei mit Blenden 152 verschlossen.

### Bezugszeichenliste

- 1: Befestigungsvorrichtung
- 2: Befestigungsvorrichtung
- 3: Befestigungsvorrichtung
- 4: Befestigungsvorrichtung
- 5: Wandteil
- 6: Ring
- 7: Befestigungsvorrichtung
- 8: Befestigungsvorrichtung
- 9: Gewindeteil
- 10: Stiftteil
- 11: Computerfunktionseinheit
- 12: Seitenflächen
- 13: Gewindebohrungen
- 14: Computerfunktionseinheit
- 15: Seitenflächen
- 16: Gewindebohrung
- 17: Trägereinheit
- 18: Seitenblech
- 19: Abdeckblech
- 20: Seitenblech
- 21: Befestigungsvorrichtung
- 22: Bohrung
- 23: Gewindebohrung
- 24: Einbaurahmen
- 25: Gewindebohrung
- 26: Computerfunktionseinheit
- 27: Gewindebohrung
- 28: Abdeckblech
- 29: Trägereinheit
- 30: Trägereinheit
- 31: Befestigungsvorrichtung
- 32: Abdeckblech
- 33: Seitenblech
- 34: Gewindebohrung
- 35: Trägereinheit
- 36: Abdeckblech
- 37: Seitenblech
- 38: Seitenblech
- 39: Befestigungsvorrichtung
- 40: Trägereinheit
- 41: Gewindebohrung
- 42: Blechteil
- 43: Rahmenteil
- 44: Öffnung
- 45: Abdeckblech
- 46: Netzteil
- 47: Gewindebohrung
- 50: Trägereinheit
- 51: Befestigungsvorrichtung
- 52: Seitenblech
- 53: Seitenblech
- 54: Seitenblech
- 55: Gewindebohrung
- 56: Trägereinheit
- 57: Befestigungsvorrichtung
- 58: Seitenblech
- 59: Seitenblech
- 60: Seitenblech
- 61: Fixiervorrichtung
- 62: Abdeckblech
- 63: Gewindebohrung
- 65: Trägereinheit
- 66: Befestigungsvorrichtung
- 67: Computergehäuse
- 68: Öffnung
- 69: Befestigungsbohrung
- 70: Gewindebohrung
- 71: Abdeckblech
- 72: Seitenblech
- 75: Trägereinheit
- 76: Befestigungsvorrichtung
- 77: Blech
- 78: Gewindebohrung
- 80: Teile
- 81: Teile
- 82: Gehäuserahmen
- 83: Teile
- 84: Teile
- 85: Gehäusedeckel
- 86: Befestigungsvorrichtung
- 87: Fixierungsvorrichtung
- 88: Fixierungsvorrichtung
- 89: Öffnung
- 90: Blech
- 91: Innengewinde
- 92: Wandteil
- 93: Fixierungsvorrichtung
- 94: Fixierungsvorrichtung
- 95: Wandteil
- 96: Computergehäuse
- 100: Trägereinheit
- 101: Gewindebohrung
- 102: Belüftungsöffnung
- 104: Träger
- 105: Öffnung
- 106: Trägereinheit
- 107: Blech
- 108: Gewindebohrung
- 109: Kante
- 110: Befestigungsbohrung
- 111: Computergehäuse
- 115: Trägereinheit
- 117: Befestigungsvorrichtung
- 119: Verbindungsplatine
- 120: Träger
- 121: Führungsschiene
- 122: Lüftungsöffnung
- 123: Öffnung
- 124: Öffnung
- 125: Steckkarten
- 126: Steckkarten
- 130: Trägereinheit
- 131: Steckkarten
- 132: Trägereinheit
- 133: Steckkarten
- 139: Steckkarten
- 140: Computergehäuse
- 141: Blechteile
- 142: Gewindebohrung
- 143: Gewindebohrung
- 144: Seitenkante
- 145: Computergehäuse
- 146: Stromversorgungseinheit
- 147: Stromversorgungseinheit
- 148: Stromversorgungseinheit
- 149: Montagevorrichtung
- 150: Montagevorrichtung
- 151: Montagevorrichtung
- 152: Blenden

## Patentansprüche

1. Computergehäuse (67, 96, 111, 140, 145), bestehend aus Gehäusebauteilen, wie Gehäuserahmenteile, Gehäusewandteile und Trägereinheiten (17, 29, 30, 35, 40, 50, 56, 65, 75, 100, 106, 130, 132) für Computerfunktionseinheiten (11, 14, 26), beispielsweise Platinen, Stromversorgungseinheiten, Erweiterungskarten und/oder Laufwerke,
dadurch gekennzeichnet,
dass zumindest eine Computerfunktionseinheit (11, 14, 26) durch stiftähnliche Befestigungsvorrichtungen (1, 2, 3, 4, 7, 8, 21, 31, 39, 51, 57, 66, 76, 86, 117) in dem Computergehäuse (67, 96, 111, 140, 145) gehalten ist, welche mit den Gewindebohrungen (13, 16, 23, 25, 27, 34, 41, 47, 55, 63, 70, 78, 101, 108, 142, 143) der Computerfunktionseinheiten (11, 14, 26) korrespondieren und in diese eingreifen.

2. Computergehäuse nach Anspruch 1,
dadurch gekennzeichnet,
dass mindestens eine Trägereinheit (17, 29, 30, 35, 40, 50, 56, 65, 75, 100, 106, 130, 132) selbst durch stiftähnliche Befestigungsvorrichtungen (1, 2, 3, 4, 7, 8, 21, 31, 39, 51, 57, 66, 76, 86, 117) in dem Computergehäuse (67, 96, 111, 140, 145) aufgenommen und gehalten ist.

3. Computergehäuse nach Anspruch 1 oder 2,
dadurch gekennzeichnet,
dass die stiftähnlichen Befestigungsvorrichtungen (1, 2, 3, 4, 7, 8, 21, 31, 39, 51, 57, 66, 76, 86, 117) ein Bestandteil der Trägereinheit (17, 29, 30, 35, 40, 50, 56, 65, 75, 100, 106, 130, 132) und/oder des Computergehäuses (67, 96, 111, 140, 145) sind und/oder an diesen befestigt sind, wobei die mindestens eine Trägereinheit (17, 29, 30, 35, 40, 50, 56, 65, 75, 100, 106, 130, 132) ein fester Bestandteil des Computergehäuses (67, 96, 111, 140, 145) oder aus dem Computergehäuse (67, 96, 111, 140, 145) entfernbar ist.

4. Computergehäuse nach einem oder mehreren der Ansprüche 1 - 3,
dadurch gekennzeichnet,
dass die Trägereinheit (17, 29, 30, 35, 40, 50, 56, 65, 75, 100, 106, 130, 132) ein oder mehrteilig ausgebildet ist und mit ihren Befestigungsvorrichtungen (1, 2, 3, 4, 7, 8, 21, 31, 39, 51, 57, 66, 76, 86, 117) eine oder mehrere Computerfunktionseinheiten (11, 14, 26) halten, wobei die Computerfunktionseinheiten (11, 14, 26) zumindest einseitig, vorzugsweise zweiseitig, durch die stiftähnlichen Befestigungsvorrichtungen (1, 2, 3, 4, 7, 8, 21, 31, 39, 51, 57, 66, 76, 86, 117) gehalten sind.

5. Computergehäuse nach einem oder mehreren der Ansprüche 1 - 4,
dadurch gekennzeichnet,
dass die stiftähnlichen Befestigungsvorrichtungen (1, 2, 3, 4, 7, 8, 21, 31, 39, 51, 57, 66, 76, 86, 117) des Computergehäuses (67, 96, 111, 140, 145) oder der Trägereinheiten (17, 29, 30, 35, 40, 50, 56, 65, 75, 100, 106, 130, 132) aus Wandteilen (5) dieser, vorzugsweise durch Ausstanzen und Umbiegen herausgearbeitet sind und/oder dass die stiftähnlichen Befestigungsvorrichtungen (1, 2, 3, 4, 7, 8, 21, 31, 39, 51, 57, 66, 76, 86, 117) angeschweißt sind und/oder dass die stiftähnlichen Befestigungsvorrichtungen (1, 2, 3, 4, 7, 8, 21, 31, 39, 51, 57, 66, 76, 86, 117) aus in Gewindebohrungen (13, 16, 23, 25, 27, 34, 41, 47, 55, 63, 70, 78, 101, 108, 142, 143) einschraubbaren Stiftschrauben mit Gewindeteil (9) und einem glatten Stiftteil (10) bestehen, wobei das Gewindeteil (9) vorzugsweise einen größeren Durchmesser als das Stiftteil (10) aufweist.

6. Computergehäuse nach einem oder mehreren der Ansprüche 1 - 5,
dadurch gekennzeichnet,
dass die stiftähnlichen Befestigungsvorrichtungen (1, 2, 3, 4, 7, 8, 21, 31, 39, 51, 57, 66, 76, 86, 117) vorzugsweise aus dem Metall des Computergehäuses (67, 96, 111, 140, 145) oder der Trägereinheit (17, 29, 30, 35, 40, 50, 56, 65, 75, 100, 106, 130, 132) bestehen und/oder dass die stiftähnlichen Befestigungsvorrichtungen (1, 2, 3, 4, 7, 8, 21, 31, 39, 51, 57, 66, 76, 86, 117) aus einem natürlichen oder künstlichen Material oder einer Kombination von verschiedenen Materialien bestehen und/oder dass die stiftähnlichen Befestigungsvorrichtungen (1, 2, 3, 4, 7, 8, 21, 31, 39, 51, 57, 66, 76, 86, 117) aus einem Metallkern mit einer zumindest teilweise elastischen Ummantelung bestehen oder mit einem Ring (6) aus elastischem Material ausgestattet sind.

7. Computergehäuse nach einem oder mehreren der Ansprüche 1 - 6,
dadurch gekennzeichnet,
dass die Enden der stiftähnlichen Befestigungsvorrichtungen (1, 2, 3, 4, 7, 8, 21, 31, 39, 51, 57, 66, 76, 86, 117) zumindest teilweise einen runden, dreieckigen, viereckigen oder vieleckigen Querschnitt aufweisen.

8. Computergehäuse nach einem oder mehreren der Ansprüche 1 - 7,
dadurch gekennzeichnet,
dass ein oder mehrere Computerfunktionseinheiten (11, 14, 26) teilweise durch eine Trägereinheit (17, 29, 30, 35, 40, 50, 56, 65, 75, 100, 106, 130, 132) und teilweise durch einen Teil des Computergehäuses (67, 96, 111, 140, 145), beispielsweise des Gehäuserahmens (82), gehalten sind und/oder dass einzelne Trägereinheiten (17, 29, 30, 35, 40, 50, 56, 65, 75, 100, 106, 130, 132) oder Trägereinheitenteile Bestandteil des Computergehäuses (67, 96, 111, 140, 145), insbesondere der äußeren Gehäuseteile, sind.

9. Computergehäuse nach einem oder mehreren der Ansprüche 1 - 8,
dadurch gekennzeichnet,
dass mehrere gleichgroße und/oder unterschiedlich große Computerfunktionseinheiten (11, 14, 26) in einer Trägereinheit (17, 29, 30, 35, 40, 50, 56, 65, 75, 100, 106, 130, 132) zusammengefasst und ein- oder beidseitig durch Befestigungsvorrichtungen (1, 2, 3, 4, 7, 8, 21, 31, 39, 51, 57, 66, 76, 86, 117) fixiert sind, wobei im Fall einer einseitigen Anordnung durch Flächenpressung der gegenüberliegenden Seite eine Fixierung erfolgt und/oder dass mehrere unterschiedliche Trägereinheiten (17, 29, 30, 35, 40, 50, 56, 65, 75, 100, 106, 130, 132) kombiniert oder ineinander verschachtelt in dem Computergehäuse (67, 96, 111, 140, 145) angeordnet sind.

10. Computergehäuse nach einem oder mehreren der Ansprüche 1 - 9,
dadurch gekennzeichnet,
dass eine Trägereinheit (17, 29, 30, 35, 40, 50, 56, 65, 75, 100, 106, 130, 132) zur Aufnahme von Platinen, Erweiterungs-, Steckkarten (125, 126, 131, 133, 139) oder Stromversorgungseinheiten (46, 146, 147, 148) vorgesehen ist, welche in ihrer Bauform der vollen oder halben Bauhöhe von einem und/oder mehreren 5,25-Zoll-Computerfunktionseinheiten entspricht und mit den einzusetzenden Computerfunktionseinheiten (11, 14, 26) korrespondierende Befestigungsvorrichtungen (1, 2, 3, 4, 7, 8, 21, 31, 39, 51, 57, 66, 76, 86, 117) und/oder stiftähnliche Befestigungsvorrichtungen (1, 2, 3, 4, 7, 8, 21, 31, 39, 51, 57, 66, 76, 86, 117) und die gleichen Befestigungsbohrungen, wie handelsübliche 5,25-Zoll-Computerfunktionseinheiten (11, 14, 26), aufweisen.

11. Computergehäuse nach einem oder mehreren der Ansprüche 1 - 10,
dadurch gekennzeichnet,
dass eine oder mehrere Trägereinheiten (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) in einer Trägereinheit (17, 29, 30, 35, 40, 50, 56, 65, 75, 100, 106, 130, 132) für 5,25-Zoll-Einbauschächte einschiebbar und/oder montierbar sind und/oder dass ein oder mehrere Trägereinheiten (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) an einer Öffnung (44, 68, 89, 105, 123, 124) in einem Gehäusewandteil für 5,25-Zoll-Computerfunktionseinheiten (11, 14, 26) befestigt sind, wobei das Computergehäuse (67, 96, 111, 140, 145) vorzugsweise aus wenigen identischen Teilen mit großen Öffnungen (44, 68, 89, 105, 123, 124) zur Aufnahme der Trägereinheiten (17, 29, 30, 35, 40, 50, 56, 65, 75, 100, 106, 130, 132) oder Computerfunktionseinheiten (11, 14, 26) im 5,25-Zoll-Format aufgebaut ist.

12. Computergehäuse nach einem oder mehreren der Ansprüche 1 - 11,
dadurch gekennzeichnet,
dass die Trägereinheit (17, 29, 30, 35, 40, 50, 56, 65, 75, 100, 106, 130, 132) für Platinen oder Steckkarten (125, 126, 131, 133, 139) mit einer Trägereinheit (17, 29, 30, 35, 40, 50, 56, 65, 75, 100, 106, 130, 132) für Verbindungsplatinen der Steckkarten (125, 126, 131, 133, 139) zu einer Einheit elektrisch verbunden sind.

13. Computergehäuse nach einem oder mehreren der Ansprüche 1 - 12,
dadurch gekennzeichnet,
dass durch mindestens eine Trägereinheit (17, 29, 30, 35, 40, 50, 56, 65, 75, 100, 106, 130, 132) für Platinen mittels stiftähnlichen Befestigungsvorrichtungen (1, 2, 3, 4, 7, 8, 21, 31, 39, 51, 57, 66, 76, 86, 117) der Raum, der von einem Computergehäuse (67, 96, 111, 140, 145) für eine Trägereinheit (17, 29, 30, 35, 40, 50, 56, 65, 75, 100, 106, 130, 132) für Platinen zur Verfügung gestellt wird, für 5,25-Zoll-Computerfunktionseinheiten (11, 14, 26) ganz oder teilweise nutzbar ist.

14. Computergehäuse nach einem oder mehreren der Ansprüche 1 -13,
dadurch gekennzeichnet,
dass eine oder mehrere Trägereinheiten (17, 29, 30, 35, 40, 50, 56, 65, 75, 100, 106, 130, 132) für Platinen oder Erweiterungskarten in die Trägereinheit (17, 29, 30, 35, 40, 50, 56, 65, 75, 100, 106, 130, 132) mit 5,25-Zoll-Einbauschächten mit stiftähnlichen Befestigungsvorrichtungen (1, 2, 3, 4, 7, 8, 21, 31, 39, 51, 57, 66, 76, 86, 117) lösbar, beispielsweise durch Führungsschienen, eingesetzt ist.

15. Computergehäuse nach einem oder mehreren der Ansprüche 1 - 14,
dadurch gekennzeichnet,
dass das Gehäuse für Stromversorgungseinheiten (46, 146, 147, 148) von Computern durch eine Montagevorrichtung von außen entfernbar in einem Standardeinbauplatz einer 5,25-Zoll-Computerfunktionseinheit (11, 14, 26) halber oder voller Bauhöhe durch stiftähnliche Befestigungsvorrichtungen (1, 2, 3, 4, 7, 8, 21, 31, 39, 51, 57, 66, 76, 86, 117) montiert ist und/oder dass das Gehäuse für Stromversorgungseinheiten (46, 146, 147, 148) von Computern in einem Standardeinbauplatz einer 5,25-Zoll-Computerfunktionsseinheit (11, 14, 26) halber oder voller Bauhöhe durch stiftähnliche Befestigungsvorrichtungen (1, 2, 3, 4, 7, 8, 21, 31, 39, 51, 57, 66, 76, 86, 117) montiert ist.

16. Computergehäuse nach einem oder mehreren der Ansprüche 1 - 15,
dadurch gekennzeichnet,
dass die Trägereinheiten (17, 29, 30, 35, 40, 50, 56, 65, 75, 100, 106, 130, 132) für Platinen, Erweiterungs-, Steckkarten (125, 126, 131, 133, 139) oder Stromversorgungseinheiten (46, 146, 147, 148) mit mehreren Lüftungsöffnungen (105, 123, 124), beispielsweise durch offene Wandteile, ausgestattet sind, wobei die Lüftungsöffnungen vorzugsweise in der unteren und oberen Seite der Trägereinheiten (17, 29, 30, 35, 40, 50, 56, 65, 75, 100, 106, 130, 132) ausgebildet sind.

17. Computergehäuse nach einem oder mehreren der Ansprüche 1 - 17,
dadurch gekennzeichnet,
dass die Trägereinheiten (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) aus identischen und/oder unterschiedlichen Bauteilen bestehen, beispielsweise aus zwei länglichen und flachen Blechen (90, 141), aus denen die stiftähnlichen Befestigungsvorrichtungen (1, 2, 3, 4, 7, 8, 21, 31, 39, 51, 57, 66, 76, 86, 117) hervorstehen, wobei die Bleche (90, 141) der Trägereinheit (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) an mindestens einer langen Seite mindestens ein abgewinkeltes Trägerteil über die gesamte Länge aufweisen.

18. Computergehäuse nach einem oder mehreren der Ansprüche 1 - 16,
dadurch gekennzeichnet,
dass das abgewinkelte Bestandteil der Trägereinheit (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) einen Teil eines Gehäusewandteils bildet und längliche und flache Bleche der Trägereinheit (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) in der Länge an die Höhe angepasst sind, die mehrere übereinander liegende Computerfunktionseinheiten (11, 14, 26) im 5,25-Zoll-Format aufweisen, zuzüglich einem oberen und unteren Abstand zur Gehäusewand.

19. Computergehäuse nach einem oder mehreren der Ansprüche 1 - 18,
dadurch gekennzeichnet,
dass vier exakt gleiche Bleche (90, 141) mit stiftähnlichen Befestigungsvorrichtungen (1, 2, 3, 4, 7, 8, 21, 31, 39, 51, 57, 66, 76, 86, 117) und mit mindestens einem abgewinkelten Teil als zwei Trägereinheiten (17, 29, 30, 35, 40, 50, 56, 65, 75, 100, 106, 130, 132) mit mehreren aneinander liegenden 5,25-Zoll-Einbauplätzen verwendbar sind, während sie gleichzeitig einen Teil des Gehäuserahmens, einen Teil des Frontwandteils und ein Teil des Rückwandteils eines Computergehäuses (67, 96, 111, 140, 145) bilden und/oder dass vier exakt gleiche Bleche (90, 141), welche stiftähnliche Befestigungsvorrichtungen 1, 2, 3, 4, 7, 8, 21, 31, 39, 51, 57, 66, 76, 86, 117), die aus dem Blech herausgearbeitet sind und Innengewinde zur Aufnahme von stiftähnlichen Befestigungsvorrichtungen (1, 2, 3, 4, 7, 8, 21, 31, 39, 51, 57, 66, 76, 86, 117) mit einem Gewinde aufweisen und mit mindestens einem abgewinkelten Teil als zwei Trägereinheiten (17, 29, 30, 35, 40, 50, 56, 65, 75, 100, 106, 130, 132) mit mehreren aneinander liegenden 5,25-Zoll-Einbauplätzen vorgesehen sind, während sie gleichzeitig ein Teil des Gehäuserahmens, ein Teil des Frontwandteils und/oder ein Teil des Rückwandteils eines Computergehäuses (67, 96, 111, 140, 145) bilden.

20. Computergehäuse nach einem oder mehreren der Ansprüche 1 - 19,
dadurch gekennzeichnet,
dass die stiftähnlichen Befestigungsvorrichtungen (1, 2, 3, 4, 7, 8, 21, 31, 39, 51, 57, 66, 76, 86, 117) zwischen 3 oder 4 mm aus der Oberfläche der Trägereinheit (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) herausragen oder dass die stiftähnlichen Befestigungsvorrichtungen (1, 2, 3, 4, 7, 8, 21, 31, 39, 51, 57, 66, 76, 86, 117) zwischen 6 und 7 mm aus der Oberfläche der Trägereinheit (17, 29, 30, 35, 40, 50, 56, 65, 75, 100, 106, 130, 132) mit stiftähnlichen Befestigungsvorrichtungen (1, 2, 3, 4, 7, 8, 21, 31, 39, 51, 57, 66, 76, 86, 117) herausragen, wenn zusätzlich ein schwingungsdämpfendes Element (6) zwischen Computerfunktionseinheit und Trägereinheit (17, 29, 30, 35, 40, 50, 56, 65, 75, 100, 106, 130, 132) vorgesehen ist.
